(19) **Europäisches Patentamt**

**European Patent Office**

**Office européen des brevets**

(11) **EP 1 304 636 A1**

(12) **EUROPEAN PATENT APPLICATION**
published in accordance with Art. 158(3) EPC

(43) Date of publication:
**23.04.2003 Bulletin 2003/17**

(51) Int Cl.⁷: **G06F 17/60**, G07B 15/00

(21) Application number: **01953330.6**

(86) International application number:
**PCT/JP01/06511**

(22) Date of filing: **27.07.2001**

(87) International publication number:
**WO 02/011006 (07.02.2002 Gazette 2002/06)**

(84) Designated Contracting States:
**AT BE CH CY DE DK ES FI FR GB GR IE IT LI LU MC NL PT SE TR**

(30) Priority: **27.07.2000 JP 2000227447**
**11.07.2001 JP 2001210549**

(71) Applicant: **SONY CORPORATION**
**Tokyo 141 (JP)**

(72) Inventors:
- **YUI, Yasuji, c/o SONY CORP.**
  **Tokyo 141-0001 (JP)**
- **ISHII, Miruka, c/o SONY CORP.**
  **Tokyo 141-0001 (JP)**

(74) Representative: **Nicholls, Michael John et al**
**J.A. KEMP & CO.**
**14, South Square**
**Gray's Inn**
**London WC1R 5JJ (GB)**

(54) **RENTAL SYSTEM FOR MOVABLE BODY SUCH AS VEHICLE**

(57)    The present invention is a movable body management system which can appropriately calculate a movable body fee according to availability etc. and flexibly and effectively allow movable bodies to be used. Each of vehicles such as cars and bicycles has a GPS capability to detect a current position of its own at a specified time interval. The system transmits information indicating the detected current position to an operating company for managing current positions of respective vehicles. When each of vehicles such as bicycles is rented out to a member and is used, the system stars measuring a traveling distance and a traveling time. When the use of the vehicle ends, the system transmits the measured traveling distance and traveling time to a server apparatus in the operating company. The operating company's server apparatus calculates the fee for settlement according to the transmitted traveling distance and traveling time.

**FIG.1**

EP 1 304 636 A1

**Description**

Technical Field

The present invention relates to a movable body rental system, a movable body management system, a movable body apparatus, a movable body management apparatus, a movable body rental method, a movable body management method, and a recording medium for recording programs to implement these methods for renting out movable bodies such as bicycles, cars, etc. with some charge.

Background Art

Conventionally, there is provided a movable body rental service for renting out movable bodies such as bicycles and cars. A user is given permission to rent a movable body at a specified lending location and returns that movable body to the specified return location after use. In this case, the rental fee as a charge for the movable body is often determined by the period from the time when the movable body is lent to the time when it is returned to the return location.

According to a rental agreement, flat rates may be settled depending on lending periods from the time of lending to the time of return, e.g., by setting a specified fee for four hours and another specified fee for up to eight hours over four hours. In rental services of movable bodies, rental fees are often determined according to periods of lending movable bodies.

In a long-term lease contract, a user rents a movable body such as a car for a relatively long period such as three or five years. As a charge for using the movable body, a lease fee is calculated by dividing a purchase price of the movable body by the number of months for three or five years and multiplying the result by a specified interest rate. Also in this case, the lease fee is determined according to the lending period for the movable body.

An invention of the car rental system is disclosed in Japanese Patent Application Laid-Open Publication No. 6-68095. In this system, the central control apparatus manages a plurality of rental cars, allowing users to use nearby rental cars. This invention automatically determines whether the user is eligible to rent a car, and calculates the rental fee.

In the rental or lease service for movable bodies as mentioned above, the rental or lease fee is determined by a period of renting out the movable body. Accordingly, after a user rents the movable body such as a bicycle or a car, the constant fee is charged regardless of whether the user uses the rented movable body or not.

Namely, in the case of the same lending period, the charge is unchanged regardless of whether the movable body covers a long or short distance. When the rented movable body covers a short distance, the user may consider the charge is comparatively high.

In the movable body rental system, the user must rent the movable body such as a bicycle or a car and return it to a specified return location. The return location may be the same as or different from the lending location. An attempt is made to improve the convenience for users by settling a plurality of lending and return locations.

There may be the case where it is difficult to find a lending location for movable bodies or there are limited number of lending locations. If there are limited number of locations for returning movable bodies, it may be impossible to flexibly and effectively use movable bodies for the rental system.

These problems also apply to the invention of the car rental system described in Japanese Patent Application Laid-Open Publication No. 6-68095. When movable bodies are rented automatically like the invention of the car rental system described in Japanese Patent Application Laid-Open Publication No. 6-68095, the reliable authentication must be conducted for renting movable bodies for rent to only eligible users.

In order to rent and use movable bodies such as cars according to the clear and economical fee structure, there is a demand for a system which allows nearby movable bodies to be used readily and permits only authenticated users to rent out movable bodies.

Disclosure of the Invention

The present invention has been made in consideration of the foregoing. It is therefore an object of the present invention to provide a movable body rental system, a movable body management system, a movable body apparatus and a movable body management apparatus used in these systems, and a recording medium to record programs executed on each apparatus for appropriately calculating the movable body charge according to availability and flexibly and effectively using movable bodies.

In order to achieve this object, a movable body rental system according to the present invention has a plurality of movable body apparatuses and a movable body management apparatus to manage the plurality of movable body apparatuses, wherein each of the plurality of movable body apparatuses comprises: authentication information transmission means for transmitting authentication information to the movable body management apparatus; authentication result information reception means for receiving authentication result information returned in response to the authentication information; lock means for preventing the use of the movable body apparatus; lock control means for controlling the lock means according to the authentication result information received by the authentication result information reception means; distance measuring means for measuring mileage; distance information transmission means for transmitting information indicating mileage measured by the distance measuring means to the movable body management apparatus; time measuring means for measuring the driving time; and time information transmission means for transmitting information indicating the driving time measured by the time measuring means to the movable body management apparatus. The movable body management apparatus constituting this system comprises: authentication information reception means for receiving the authentication information from the movable body apparatus; authentication result information transmission means for transmitting authentication result information corresponding to the authentication information received by the authentication information reception means to the movable body apparatus; distance information reception means for receiving information indicating the mileage from the movable body apparatus; time information reception means for receiving information indicating the driving time from the movable body apparatus; fee calculation means for calculating a fee for the movable body apparatus according to the mileage received by the distance information reception means and the driving time received by the time information reception means; and settlement means for performing settlement processing according to the use of the movable body apparatus based on a calculation result of the fee calculation means.

In this movable body rental system, the movable body apparatus transmits authentication information about a user who intends to use a movable body. The movable body management apparatus receives this information. The movable body management apparatus transmits authentication result information corresponding to the received authentication information to the transmitting movable body apparatus. The authentication result information includes information indicative of whether the authentication is obtained normally.

The movable body apparatus receives the authentication result information from the movable body management apparatus. According to this authentication result information, the lock control means controls the lock means. Namely, when the authentication result information indicates the successful authentication, the lock is released to enable operations of the movable body apparatus. When the authentication result information indicates the unsuccessful authentication, the lock is not released.

After the authentication is obtained and the lock is released, the distance measuring means of the movable body apparatus measures the mileage of the relevant movable body apparatus. The distance information transmission means information indicating this mileage to the movable body management apparatus. Likewise, the time measuring means of the movable body apparatus measures the driving time of the relevant movable body apparatus. The time information transmission means transmits information indicating this driving time to the movable body management apparatus.

In the movable body management apparatus, the distance information reception means receives information indicating the mileage. The time information reception means receives information indicating the driving time. Based on the information indicating the mileage and the information indicating the driving time, the fee calculation means of the movable body management apparatus calculates a fee for the movable body apparatus. The settlement means settles the calculated fee.

In order to make the movable body apparatus available, authentication must be obtained from the movable body management apparatus. This allows the movable body apparatus to be used by proper users only. Further, it is possible to calculate a fee for using the movable body apparatus based on the mileage and the driving time of the movable body. Accordingly, it is possible to appropriately calculate the fee according to actual availability of the movable body apparatus, making the fee reasonable for users.

Another movable body rental system according to the present invention has a plurality of movable body apparatuses and a movable body management apparatus to manage the plurality of movable body apparatuses, wherein each of the plurality of movable body apparatuses comprises: authentication information transmission means for transmitting authentication information to the movable body management apparatus; authentication result information reception means for receiving authentication result information returned in response to the authentication information; lock means for preventing the use of the movable body apparatus; lock control means for controlling the lock means according to the authentication result information received by the authentication result information reception means; current position detection means for detecting a current position at a specified time interval; and current position transmission means for transmitting information indicating a current position each time the current position detection means detects it.

In the present invention, the movable body management apparatus comprises: authentication information reception means for receiving the authentication information from the movable body apparatus; authentication result information transmission means for transmitting an authentication result corresponding to the authentication information received by the authentication information reception means to the movable body apparatus; current position reception means for receiving the information indicating the current position of movable body apparatus; mileage measuring means for measuring mileage of the movable body apparatus by using the current positional information received by the current position reception means; driving time measuring means for measuring the driving time of the movable body apparatus according to the current positional information received by the current position reception means; fee calculation means for calculating a fee for the movable body apparatus according to the mileage measured by the mileage measuring means and the driving time measured by the driving time measuring means; and settlement means for performing settlement processing according to the use of the movable body apparatus based on a calculation result of the fee calculation means.

In this movable body rental system, the movable body apparatus transmits authentication information about a user who intends to use a movable body. The movable body management apparatus receives this information. The movable body management apparatus transmits authentication result information corresponding to the received authentication information to the transmitting movable body apparatus. The authentication result information includes information indicative of whether the authentication is obtained normally.

The movable body apparatus receives the authentication result information from the movable body management apparatus. According to this authentication result information, the lock control means controls the lock means. Namely, when the authentication result information indicates the successful authentication, the lock is released to enable operations of the movable body apparatus. When the authentication result information indicates the unsuccessful authentication, the lock is not released.

After authentication is granted and the lock is released, the current position detection means of the movable body apparatus detects the current position of the movable body apparatus at a specified interval. The current position transmission means transmits the information indicating the detected current position to the movable body management apparatus.

The current position reception means of the movable body management apparatus receives information indicating the current position of the movable body apparatus. This information is detected and transmitted from the movable body apparatus at a specified time interval. Using this information indicating the current position, the mileage measuring means measures the mileage of the movable body apparatus. The driving time measuring means measures the driving time of the movable body apparatus based on the information which is detected at a specified interval and indicates the current position of the movable body apparatus.

Based on the thus measured mileage and driving time, the fee calculation means of the movable body management apparatus calculates the fee for the movable body apparatus. The settlement means settles the calculated fee.

In order to make the movable body apparatus available, authentication must be obtained from the movable body management apparatus. This allows the movable body apparatus to be used by proper users only. Further, it is possible to calculate a fee for using the movable body apparatus based on the mileage and the driving time of the movable body. Accordingly, it is possible to appropriately calculate the fee according to actual availability of the movable body apparatus, making the fee reasonable for users.

Further, it is possible to decrease loads of the movable body apparatus. In addition, the movable body management apparatus can accurately measure and manage the mileage and the driving time of the movable body apparatus.

Yet another movable body management system according to the present invention has a movable body apparatus and a movable body management apparatus, wherein the movable body apparatus comprises: current position measuring means for measuring a current position; and current position transmission means for transmitting the current positional information obtained by the current position measuring means, and wherein the movable body management apparatus comprises: current position reception means for receiving current positional information about the movable body apparatus transmitted from the current position transmission means of the movable body apparatus; provision request reception means for receiving a provision request for positional information about a nearby movable body apparatus transmitted from a user's mobile communication terminal; and positional information transmission means for transmitting current positional information about a nearby movable body apparatus to the mobile communication terminal transmitting the provision request when the provision request reception means receives the provision request.

In this movable body management system, the movable body apparatus uses the current position measuring means to measure the current position of itself and transmits this information indicating the current position to the movable body management apparatus. The movable body management apparatus uses the current position reception means to receive the information indicating the current position from the movable body apparatus for identifying and managing current positions of respective movable body apparatuses.

The movable body management apparatus uses the provision request reception means to receive a request for providing positional information about the movable body apparatus from the mobile communication terminal of a user who wants to use the movable body apparatus. The provision request reception means transmits information indicating the current position of the nearby movable body apparatus for requester's mobile telephone terminal to the corresponding mobile communication terminal.

Consequently, the user who wants to use the movable body apparatus can quickly find the current position of the nearby movable body apparatus and fast, surely use the movable body apparatus.

Other and further objects and advantages of the invention will become apparent from the following description of embodiments.

Brief Description of the Drawings

FIG. 1 is a block diagram outlining a bicycle rental system to which the present invention is applied;
FIG. 2 is a block diagram showing a bicycle controller section constituting the movable body apparatus according to the present invention;
FIG. 3 is a block diagram showing a server apparatus of an operating company to which the movable body management apparatus according to the present invention is applied;
FIGS. 4, 5, and 6 describe flows of operations in association with each other for respective parts of the bicycle rental system to which the present invention is applied;
FIG. 7 is a flowchart describing the calculation of bicycle fees in the bicycle rental system to which the present invention is applied;
FIG. 8 is a block diagram outlining a car rental system to which the present invention is applied;
FIG. 9 is a block diagram showing a car controller section constituting the movable body apparatus according to the present invention;
FIGS. 10, 11, and 12 describe flows of operations in association with each other for respective parts of the car rental system to which the present invention is applied; and
FIG. 13 is a block diagram showing another example of a car controller section constituting the movable body apparatus according to the present invention.

Best Mode for Carrying out the Invention

The following describes an embodiment of a movable body rental system, a movable body management system, a movable body apparatus, a movable body management apparatus, a movable body rental method, a movable body management method, and a movable body apparatus, or a recording medium for recording programs executed on the movable body management apparatus according to the present invention with reference to the accompanying drawings.

[First embodiment]

The first embodiment of the present invention will be described below. This embodiment explains an example of the present invention applied to a so-called bicycle rental system which rents out bicycles as movable bodies.

[Outline of the bicycle rental system]

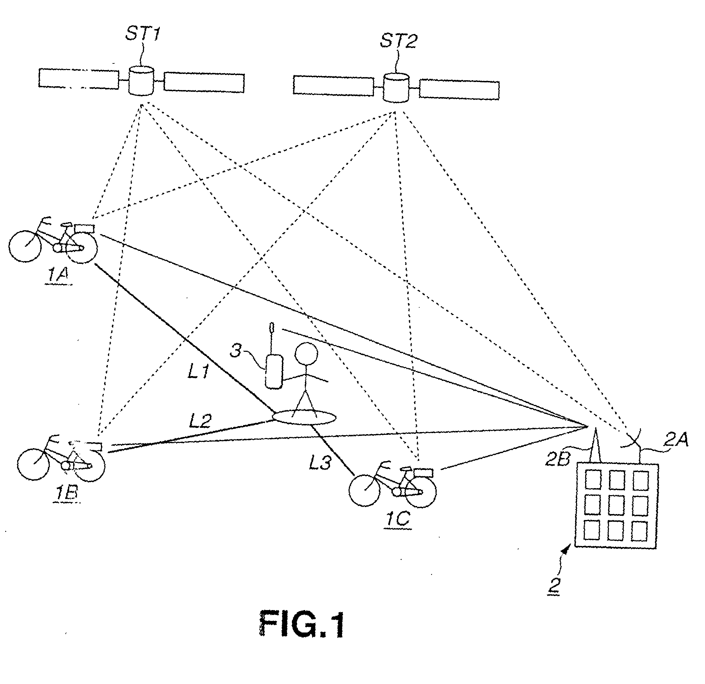

FIG. 1 outlines the bicycle rental system using the movable body rental system, the movable body management system, the movable body apparatus, the movable body management apparatus, the movable body rental method, and the movable body management method according to the present invention.

As shown in FIG. 1, a plurality of bicycles 1A, 1B, 1C, and so on is movable body apparatuses to be lent and is allowed to be dropped off freely. Each of rent-a-bicycles (hereafter just referred to as bicycles) 1A, 1B, 1C, and so on receives radio waves from at least two artificial satellites ST1 and ST2. Each bicycle is mounted with a GPS (Global Positioning System) apparatus which can accurately compute the current position by processing data supplied by the radio wave.

Each of bicycles 1A, 1B, 1C, and so on detects the current position of its own at a specified timing. Information indicating the detected current position is transmitted to an operating company 2 of the bicycle rental system via the artificial satellite.

As will be described in detail, the operating company 2 uses the movable body management apparatus. This apparatus receives information indicating the current position from bicycles 1A, 1B, 1C, and so on transmitted via the artificial satellite and always accurately manages which bicycle is located at which place. The information indicating the current position transmitted from bicycles 1A, 1B, 1C, and so on also includes movable body identification information for identifying each of bicycles 1A, 1B, 1C, and so on.

The operating company 2 always precisely manages current positions of all rent-a-bicycles. This enables a so-called bicycle drop-off service which saves having to return a rented bicycle to a specified return location. Also as will be described later, a user may return the rented bicycle to a specified return location. In this case, the rental fee is discounted.

A user who wants to use a bicycle in this bicycle rental system first contracts with the operating company 2 to obtain the membership. The member is given a member number (permission number) and purchases a virtual currency or a prepaid card for settling the bicycle fee.

The prepaid card is, e.g., a magnetic recording card which magnetically records account information corresponding to the paid amount. Similarly to the prepaid card, the virtual cell is a card-shaped or coin-shaped recording medium which records account information corresponding to the paid amount.

The virtual currency stores account information in virtual currency units only used for the bicycle rental system. The use of this virtual currency unit provides the following advantage. When there are intensive needs for this bicycle rental system and it is difficult to rent a bicycle, a conversion rate is increased from the virtual currency unit to the normal currency. This decreases a circulation amount of the virtual currency and allows bicycles to be rented easily.

When there are little needs for the bicycle rental system and the utilization rate (turnover rate) of bicycles is low, a conversion rate is decreased from the virtual currency unit to the normal currency. This increases a circulation amount of the virtual currency and expands the bicycle utilization rate. It becomes possible to control the utilization rate of the bicycle rental system etc. by using the virtual currency unit different from the normally circulated ordinary currency unit.

The first embodiment describes the bicycle rental system with an example of using a coin-type virtual currency. When actually renting a bicycle, a member telephones the operating company 2 using his or her own mobile telephone terminal 3. The member notifies the operating company 2 of his or her member number or current position and requests to provide the positional information indicating the position of a nearby bicycle.

The operating company 2 receives the request to provide the positional information indicating the position of a nearby bicycle from the member, and then authenticates whether or not the requester is a member based on the member number. When the authentication is successful, the operating company 2 searches for an available bicycle nearest to the current position of the requesting member and transmits the positional information about that bicycle to the mobile telephone terminal 3 of the requesting member.

This makes it possible to fast and accurately notify the requesting member of the position of the nearest available bicycle. As shown in the example of FIG. 1, there are three bicycles 1A, 1B, and 1C near a member having the mobile telephone terminal 3. The requesting member is provided with the positional information about bicycle 1C nearest to that member.

The member reaches the position of the intended bicycle according to the positional information from the operating company 2 and loads the virtual currency into a loading gate provided on the bicycle. As mentioned above, the virtual currency stores the payable prepaid account information etc. The bicycle reads the account information (balance information) etc. stored in the virtual currency and transmits this information as payable information to the operating company 2 via the communication network such as a telephone network.

Based on the payable information, the operating company 2 determines whether the requesting member can pay the rental fee generated by renting a bicycle. When payable, the operating company 2 transmits permission information for unlocking a bicycle to the bicycle which transmitted the payable information via the communication network. When receiving the permission information, the bicycle unlocks itself and enables the use of the bicycle by the member.

In this manner, the operating company 2 of the bicycle rental system can unlock bicycles by means of the remote control operation. After unlocking, the system starts measuring the traveling distance (mileage) and the traveling time (driving time) for the unlocked bicycle.

To cease to use the rented bicycle, the member manipulates an end key (service termination button switch) to lock the bicycle and transmit the measured traveling distance and traveling time to the operating company 2 via the communication network. Based on the transmitted traveling distance and traveling time, the operating company 2 calculates and settle the bicycle rental fee.

The bicycle rental system according to this embodiment uses GPS to detect current positions of all bicycles to be rented. The current positions are transmitted to the operating company 2 via artificial satellites, making it possible to manage which bicycle is located at which position. As mentioned above, it is possible to provide a bicycle drop-off service and notify members of positions of nearby bicycles fast and accurately.

As mentioned above, the system can calculate the bicycle fee based on the information indicating the actual usage of bicycles such as the traveling distance and the traveling time of the rented bicycle. A conventional system offers a fixed fee based on usage times even if the bicycle traveling distances differ. Unlike this system, the system according to the embodiment can properly calculate and settle the fee without causing feelings of inequality.

The communication network such as already prepared telephone networks is used for communication among the member's mobile telephone terminal 3, each of bicycles 1A, 1B, and 1C, and the operating company 2. Appropriate information communication is available among the member's mobile telephone terminal 3, each of bicycles 1A, 1B, and 1C, and the operating company 2.

[Movable body apparatus (bicycle control section)]

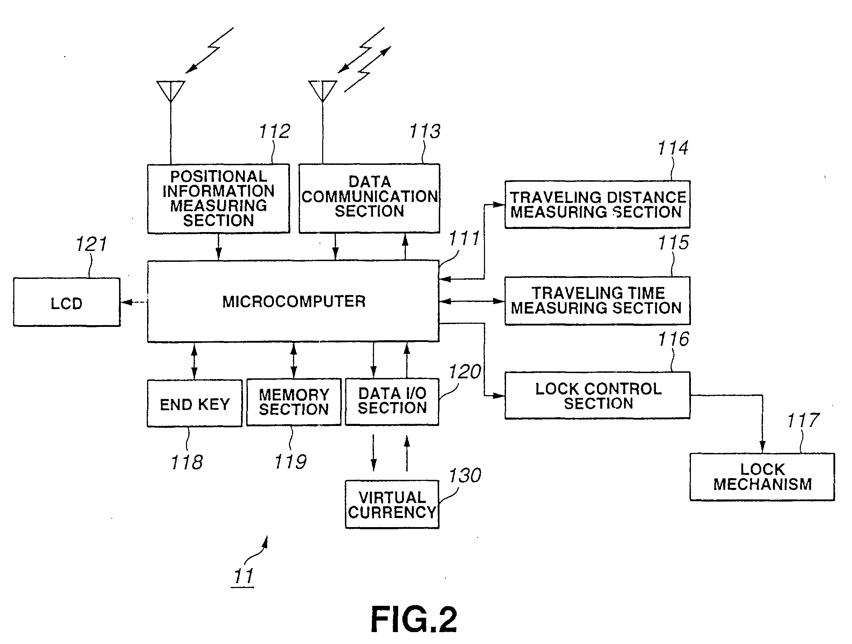

Then, the movable body apparatus according to this embodiment will now be described. In this embodiment, the movable body apparatus is a bicycle. As mentioned above, the bicycle is mounted with a bicycle controller section 11 for performing processes such as detecting its own current position. FIG. 2 is a block diagram for explaining the bicycle controller section 11 mounted on the bicycle as the movable body apparatus in this embodiment.

As shown in FIG. 2, the bicycle controller section 11 in this embodiment mounted on bicycles 1A, 1B, 1C, and so on includes a microcomputer 111. The microcomputer 111 controls each part of the bicycle controller section 11.

As shown in FIG. 2, the bicycle controller section 11 according to this embodiment comprises a position measuring section 112, a data communication section 113, a traveling distance measuring section 114, a traveling time measuring section 115, a lock control section 116, a lock mechanism 117, an end key 118, a memory section 119, a data I/O section 120 having a loading section for virtual currencies, and an LCD (Liquid Crystal Display).

A member purchases a virtual currency 130 beforehand. As mentioned above, the virtual currency stores account information corresponding to the amount paid by the member. Normally, a member carries the virtual currency 130. As will be described later, the virtual currency is loaded into the virtual currency loading section provided on a bicycle to be rented and is used for settlement when the member stops using the bicycle.

In FIG. 2, the position measuring section 112 is equivalent to a GPS apparatus and receives a radio wave from the artificial satellite. The position measuring section 112 calculates data provided from the received radio wave to detect the current position of a local apparatus, i.e., a bicycle which mounts this section. Information indicating the current position detected by the position measuring section 112 is supplied to the data communication section 113 via the microcomputer 111.

The data communication section 113 transmits the information indicating the current position of its own detected at a specified timing to the operating company 2 via artificial satellites. Further, the data communication section 113 implements communication with the operating company 2 or the member's mobile telephone terminal through the use of a communication network, i.e., a telephone network in this embodiment.

The traveling distance measuring section 114 measures a bicycle's traveling distance (mileage). In this embodiment, for example, the traveling distance is measured based on the circumference length and the number of revolutions of a bicycle wheel. The mileage measured by the traveling distance measuring section 114 is supplied to the microcomputer 111 and is managed there.

The traveling time measuring section 115 measures the traveling time (driving time) and is equipped with a timer (clock circuit). In this embodiment, the traveling time measuring section 115 includes a sensor for detecting whether the relevant bicycle's wheel is rotating. This section measures the time during which the bicycle wheel is rotating to determine the traveling time. The measured traveling time is supplied to the microcomputer 111 and is managed there.

The lock control section 116 controls the lock mechanism 117 provided on each bicycle. Under control of the microcomputer 111, the lock control section 116 controls the lock mechanism 117 to lock the bicycle mounted with bicycle controller section 11 for disabling the use of the bicycle or unlock the bicycle for enabling its use.

The lock mechanism 117 is installed on either or both of bicycle's front and rear wheels and locks or unlocks the bicycle. In this embodiment, the lock mechanism locks a bicycle by clamping its wheel from a direction crossing a rotation direction of the bicycle wheel. The lock mechanism configuration is not limited thereto and may employ various mechanisms which prevent a bicycle wheel from rotating.

The end key 118 is provided on the bicycle controller section 11 and is operated by a member at the end of the bicycle use. When this end key 118 is pressed, the microcomputer 111 can detect that the member has ceased using the bicycle.

The memory section 119 stores and maintains various information. For example, this section records various types of data and parameters such as the traveling distance and the traveling time. It is possible to read and use data or parameters recorded on the memory section 119 as needed and delete unnecessary data or parameters.

The data I/O (Input/Output) section 120 includes the virtual currency loading section, reads necessary information such as account information (balance information) recorded in the virtual currency, and supplies this information to the microcomputer 111. Based on balance update information from the microcomputer 111, the data I/O section 120 updates the balance recorded in the virtual currency.

The data I/O section 120 works as an interface between the virtual currency 130 and the microcomputer 111 in the bicycle controller section 11. The LCD 121 connected to the microcomputer 111 displays various guidance messages, alarm messages, and other necessary information under control of the microcomputer 111.

[Movable body management apparatus in the operating company 2]

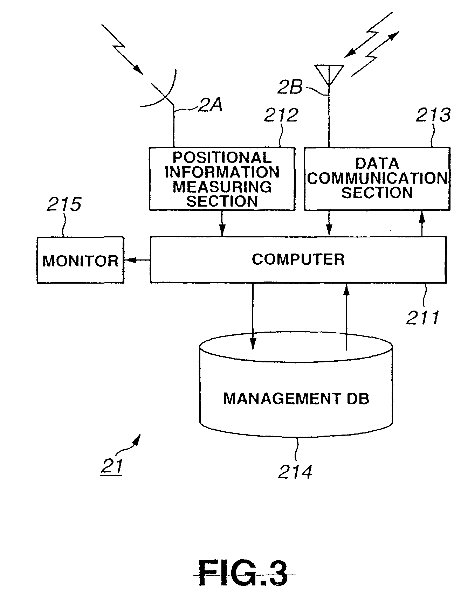

The following describes a movable body management apparatus installed in the operating company 2 according to this embodiment. FIG. 3 is a block diagram illustrating an operating company server apparatus (hereafter simply referred to as a server apparatus) functioning as a movable body management apparatus installed in the operating company 2 according to this embodiment.

As shown in FIG. 3, a server apparatus 21 installed in the operating company 2 according to this embodiment comprises a computer 211, a positional information measuring section 212, a data communication section 213, a hard disc 214 for creating a management database (hereafter abbreviated as management DB), and a monitor apparatus 215.

The computer 211 includes ROM, RAM, EEPROM, etc. (not shown) and controls each part of server apparatus 21 according to this embodiment. The computer 211 also provides control to search for a bicycle nearest to a member according to his or her request and unlock the bicycle. The computer 211 performs processing such as calculating a bicycle fee based on the traveling distance and the traveling time transmitted from the bicycle controller section 11.

The position measuring section 212 is connected to a reception antenna 2A which receives a radio wave from the artificial satellite. The position measuring section 212 receives information indicatingthe current bicycle position transmitted via the artificial satellite from the bicycle controller section 11 mounted on each bicycle and analyzes this information to detect the current position of each bicycle. The detected current position of each bicycle is stored in the management database (hereafter referred to as the management DB) via the computer 211 for managing the current position of each bicycle.

As mentioned above, the data communication section 213 enables communication with the member's mobile telephone terminal 3 or the bicycle controller section 11 via the telephone network. Using the antenna 2B, the data communication section 213 receives information such as a request to provide the bicycle's positional information and payable information transmitted via the mobile telephone terminal 3 and the mileage and the usage time transmitted from the bicycle controller section 11. The received information is demodulated and is supplied to the computer 211.

In response to a member's request to provide positional information about a bicycle, the system retrieves the positional information about a bicycle nearest to the requesting member. In addition to this positional information, the system provides permission information, settlement information, etc. These pieces of information are transmitted to the telephone network from the computer 211 via the data communication section 213 and the antenna 2B, and are finally delivered to the requesting member's mobile telephone terminal 3 or the bicycle controller section 11.

The hard disc 214 stores the management DB. The management DB is used for managing the current position of each bicycle and member information such as the past usage of bicycles by each member. The monitor apparatus 215 displays current bicycle positions, various guidance messages, alarm messages, and other necessary information under control of the microcomputer 211.

[Bicycle rental system operations]

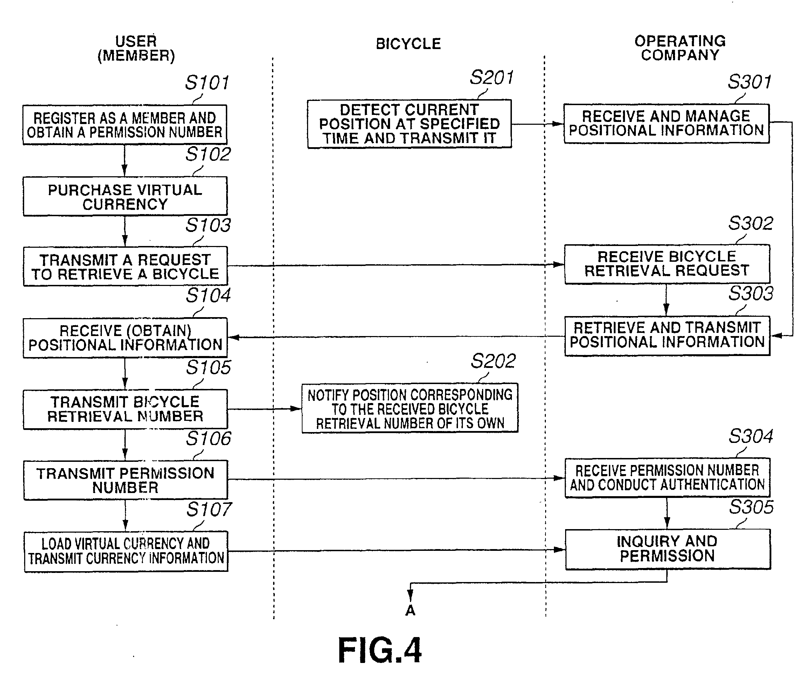

The following describes operations of the bicycle rental system according to this embodiment with reference to flowcharts in FIGS. 4 to 6. In these figures, steps between S101 and S111 correspond to processing for a member as a rent-a-bicycle user.

Steps between S201 and S210 correspond to processing in the bicycle controller section 11 of the rent-a-bicycle. Steps between S301 and S311 correspond to processing in the operating company 2.

As mentioned above, each rent-a-bicycle in this bicycle rental system is mounted with the bicycle controller section 11. The position measuring section 112 in the bicycle controller section 11 receives a radio wave from the artificial satellite at a specified interval. The position measuring section 112 analyzes data supplied from the received radio wave to detect the accurate current position of its own and supplies the microcomputer 111 with this positional information.

The microcomputer 111 transmits information indicating the current position obtained from the position measuring section 112 and its own identification information (movable body identification information) via the data communication section 113. This information is sent to the operating company 2 via the artificial satellites. The process at step S201 in FIG. 4 is equivalent to detecting and transmitting the current position of its own bicycle. This process is periodically performed in the bicycle controller section 11 mounted on each bicycle.

Using the antenna 2A, the operating company 2 receives each bicycle's current positional information transmitted from each bicycle'sbicycle controller section 11 via the artificial satellites and supplies this information to the positional information measuring section 212. The positional information measuring section 212 analyzes the current positional information received from each bicycle, detects the current positional information about each bicycle and the movable body identification information, and supplies these pieces of information to the computer 211.

The computer 211 stores or updates each bicycle's current positional information from the positional information measuring section 212 and the movable body identification information by keeping the correspondence therebetween in the management DB on the hard disc 214 for management. The process at step S301 in FIG. 4 is equivalent to receiving and managing the current positional information transmitted from each bicycle's bicycle controller section 11.

In this way, the bicycle rental system according to this embodiment always manages the current position of each bicycle. Incidentally, a user who wants to use a bicycle in the bicycle rental system according to this embodiment first registers for the operating company 2 as a member to obtain a member number or a permission number (step S101).

For the member registration, an application form is submitted to the operating company. The application form should contain an address, name, age, financial institution's account number, etc. of a user who wants to rent a bicycle. To complete the member registration, the user may directly visit the operating company 2. Alternatively, the user may mail the application form filled with necessary items to the operating company 2.

After the member registration is completed, the server apparatus 21 in the operating company 2 manages the member's information such as his or her address, name, age, financial institution's account number, etc. by recording this information in the management DB on the hard disc 214.

After completion of the member registration, a new member is given a permission number and purchases the virtual currency 130 (step S102). When the registered member who purchased the virtual currency 130 wants to use a bicycle in the bicycle rental system, that member telephones to the operating company 2 by using his or her own mobile telephone terminal 3. By doing this, the member notifies the operating company 2 of his or her current position, permission number, etc. and requests to retrieve a nearby bicycle. Namely, the member sends a bicycle retrieval request to the operating company 2 (step S103).

The operating company 2 receives the bicycle retrieval request from the member's mobile telephone terminal 3 via the antenna 2B and the data communication section 213 (step S302). The computer 211 references the management DB on the hard disc 214 and retrieves an available bicycle nearest to the member who sent the bicycle retrieval request. The operating company transmits the positional information, the identification number (bicycle retrieval number), etc. about the nearby bicycle to the telephone network via the data communication section 213 and the antenna 2B, and finally to the requesting member's mobile telephone terminal 3 (step S303).

The member's mobile telephone terminal 3 receives the positional information and the identification number (bicycle retrieval number or password) about the nearby bicycle from the operating company 2 (step S104). The member hangs up the mobile telephone terminal 3 to disconnect the telephone line and searches for the nearby bicycle based on the received positional information. The member picks up the mobile telephone terminal 3 and enters the bicycle's identification number (bicycle retrieval number) obtained at step S104 to call the nearby bicycle (step S105).

The bicycle's bicycle controller section 11 receives the bicycle retrieval number assigned to the bicycle via the data communication section 113. The microcomputer 111 flashes the LCD 121 to notify the member of the bicycle position (step S202).

In this embodiment, when the member reaches a place where the intended bicycle is stationed, the member telephones to the operating company 2 by using his or her mobile telephone terminal 3. The member enters the permission number (member number) assigned to him or her by operating dial keys on the mobile telephone terminal 3, transmits this number to the operating company 2, and disconnects the line (step S106).

The member loads his or her own virtual currency 130 into the data I/O section 120 of the bicycle's bicycle controller section 11. As mentioned above, the data I/O section 120 reads the account information (balance information) recorded on the virtual currency 130 and supplies this information to the microcomputer 111. The microcomputer 111 transmits the account information to the operating company 2 via the data communication section 113 (step S107).

In the operating company 2, the computer 211 in the server apparatus 21 receives the permission number via the data communication section 213 and authenticates whether the member is assigned a valid permission number (step S304). Further, the computer 211 in the server apparatus 21 determines whether the account information transmitted at step S107 indicates a payable amount, i.e., whether the member can use a bicycle (step S305).

When the authentication is successful at step S305 and the virtual currency 130 keeps a sufficient balance, the computer 211 in the server apparatus 21 transmits the permission information to the bicycle controller section 11 loaded with the virtual currency via the data communication section 213.

The processes at steps S106 and 304 are also available by performing communication between the bicycle controller section 11 and the server apparatus 21 in the operating company 2 without using the member's mobile telephone terminal 3. For example, the virtual currency 130 may be configured to record not only the account information, but also the member number. It may be preferable to transmit the member number and the account information (availability information) to the server apparatus 21 in the operating company 2. This allows the server apparatus 21 in the operating company 2 to authenticate the member and inquire the balance of the virtual currency 130.

The bicycle controller section 11 receives the permission information via the data communication section 113 and controls the lock control section 116 to unlock the bicycle's lock mechanism 117 (step S203). The microcomputer 111 in the bicycle controller section 11 controls the traveling distance measuring section 114 to start measuring the traveling distance and controls the traveling time measuring section 115 to start measuring the traveling time (step S204).

The microcomputer 111 determines whether the member user has finished using the bicycle, i.e., whether the end key 118 is pressed (step S205). When it is determined that the end key 118 is not pressed as a result of the process at step S205, the process from step S204 is repeated to continue measuring the bicycle's traveling distance and traveling time.

When it is determined that the end key 118 is pressed as a result of the process at step S205, the microcomputer 111 controls the lock control section 116 which then controls the lock mechanism to lock the bicycle (step S206). At this point, the use of the bicycle terminates.

As mentioned above, the traveling distance measuring section 114 has measured the traveling distance. The traveling time measuring section 115 has measured the traveling time. The microcomputer 111 in the bicycle controller section 11 transmits the thus measured traveling distance and time to the telephone network in this embodiment via the data communication section 113, then finally to the operating company 2 (step S207).

The operating company 2 receives the information indicating the mileage and the driving time from the bicycle controller section 11 (step S306). Using the received information, the operating company's server apparatus 21 calculates the bicycle fee (step S307). As will be described later in detail, the fee calculation at step S307 is based on the traveling distance and the traveling time of the bicycle that has been used.

The computer 211 in the operating company's server apparatus 21 determines whether the virtual currency 130 keeps the balance sufficient to pay the fee (step S308). This process is based on the account information (payable information) in the virtual currency 130 received at step S305 and the fee calculated at step S307.

When it is determined that the balance of the virtual currency 130 is insufficient as a result of the process at step S308, the computer 211 in the server apparatus 21 creates reminder information. The computer transmits this information to the member's mobile telephone terminal 3 via the data communication section 213 (step S309). Transmitting the reminder information at step S309 warns the member user that the balance of the virtual currency 130 is insufficient.

The member user's mobile telephone terminal 3 receives the reminder information from the operating company's server apparatus 21 (step S108). The mobile telephone terminal 3 displays a message on its LCD or uses a voice capability to notify the member of the insufficient balance remaining in the virtual currency 130 loaded into the rented bicycle.

The member transmits his or her payment intention to the server apparatus 21 in the operating company 2 (step S109) by operating his or her mobile telephone terminal 3, e.g., operating specified keys thereon. The server apparatus 21 in the operating company 2 receives the payment intention from the member's mobile telephone terminal 3 (step S310).

When the balance of the virtual currency 130 is insufficient in this embodiment, the server apparatus 21 in the operating company 2 transmits a reminder to the member and confirms the member's payment intention. The member user is accurately notified of the state of the bicycle fee payment, eliminating worry about the payment.

In this embodiment, only members can use rent-a-bicycles. According to the above-mentioned processes at steps S106 and S304, the server apparatus 21 in the operating company 2 can manage which bicycle is rented out to which member.

When the balance of the virtual currency 130 is insufficient, the shortage can be adjusted later on. If a member user is not notified of the insufficient balance as needed, the member cannot know when the balance shortage occurred, and may worry about this.

A sequence of processes at steps S309, S108, S109, and S310 is used to issue a reminder to notify that the balance in the virtual currency 130 has become insufficient. The system transmits a reminder to notify the member of the insufficient balance in the virtual currency 130 by requesting this member to enter confirmation for the reminder. This notification allows the member to recognize that he or she must adjust the shortage.

The computer 211 in the server apparatus 21 may determine that the virtual currency 130 does not record an insufficient balance at step S308. In addition, the computer may receive the payment intention from the member at step S310. When both of these conditions are satisfied, that computer creates balance update information for the virtual currency 130 according to the bicycle fee calculated at step S307. The computer then transmits that information to the bicycle controller section 11 of the rental expired bicycle (step S311).

Here, the balance update information indicates the final balance obtained by subtracting the most recent fee from the first balance. The rental expired bicycle's bicycle controller section 11 receives the balance update information from the server apparatus 21 via the data communication section 113 and supplies this information to the microcomputer 111 (step S208).

The microcomputer 111 uses the data I/O section 120 to update the balance for the virtual currency 130 loaded in this section (step S209). Due to this operation, the virtual currency 130 maintains the final balance with the most recent bicycle fee subtracted.

After updating the balance in the virtual currency 130, the microcomputer 111 in the bicycle controller section 11 controls the loading section for virtual currencies in the data I/O section 120 to eject the virtual currency 130 from the loading section and return it to the member (step S210). The member receives the virtual currency 130 ejected from the loading section for virtual currencies in the bicycle controller section 11 (step S110). This completes the use of the rented bicycle and the settlement processing (step S111).

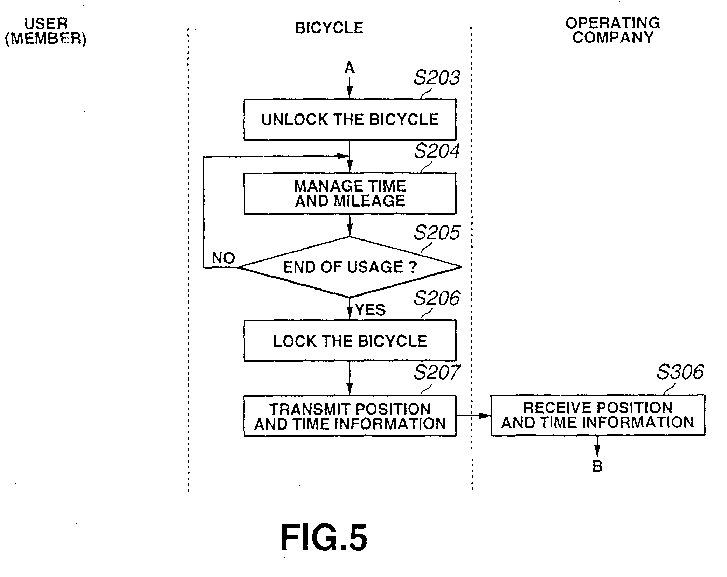

At step S206 in FIG. 5, it is necessary to confirm that the bicycle completely stops and lock the bicycle by using the lock mechanism 117. It may be preferable to warn a user, e.g., by displaying a confirmation message for locking on the LCD 121 in the bicycle controller section 11 and then lock the bicycle. Further, it may be preferable to request the user to enter confirmation after warning.

[Calculating the fee]

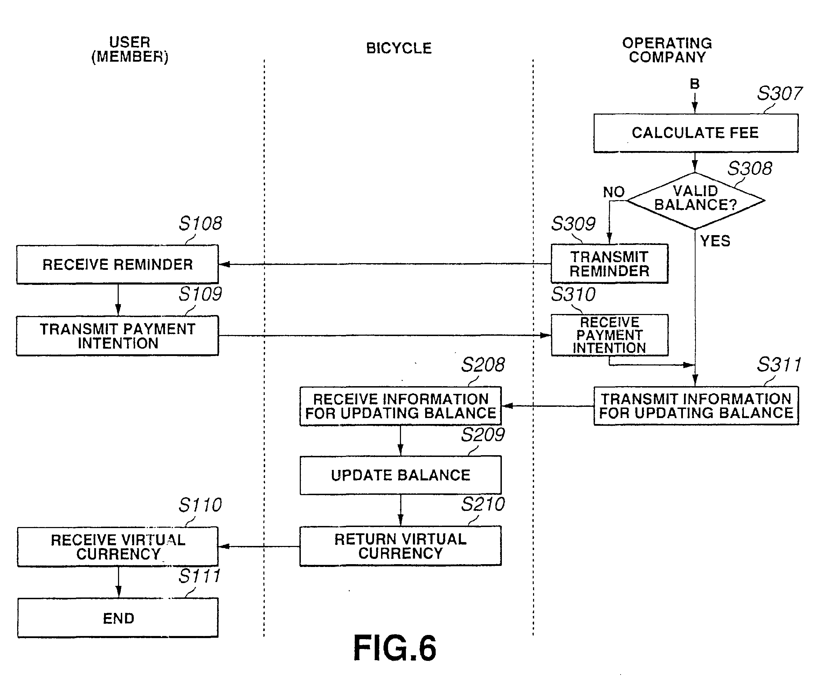

The following specifically describes calculation of the bicycle fee performed at step S307 in FIG. 6. As mentioned above, the bicycle rental system according to this embodiment calculates the fee based on the traveling distance and the traveling time of the rental expired bicycle.

In the description to follow, the traveling distance is assumed to be L1 and the traveling time is assumed to be Tx. As mentioned above, traveling distance L1 is measured in the traveling distance measuring section 114 of the bicycle controller section 11 and indicates a distance actually covered by the bicycle. Also as mentioned above, traveling time Tx is measured in the traveling time measuring section 115 of the bicycle controller section 11 and represents a time duration of wheel rotation after the bicycle is unlocked.

In this embodiment, fee M1 is calculated according to equation (1) to follow.

$$\text{Fee M1} = L1 \times k1 + Tx \times k2 \qquad (1)$$

In this equation (1), coefficient k1 is used for converting traveling distance L1 to a fee. Coefficient k2 is used for converting traveling time Tx to a fee.

Coefficients k1 and k2 are defined so that the fee can be discounted when the member returns the bicycle to a specified return location or can be increased when the member drops off the bicycle. Namely, coefficient k1 is predetermined according to the traveling distance and whether or not the bicycle is dropped off. Coefficient k2 is predetermined according to traveling time Tx and whether or not the bicycle is dropped off.

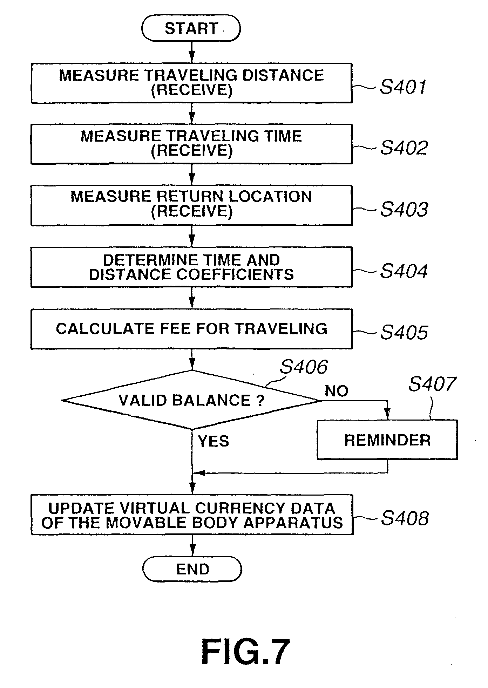

FIG. 7 is a flowchart explaining processes for calculating the bicycle fee and updating the balance in the virtual currency 130 performed in the server apparatus 21 of the operating company 2 according to this embodiment. In this embodiment, as mentioned above, the bicycle's traveling distance and time are measured in the traveling distance measuring section 114 and the traveling time measuring section 115 of the bicycle controller section 11 mounted on the bicycle. When the end key 118 is operated to terminate the use of the bicycle, the bicycle controller section 11 transmits the measured traveling distance and time to the server apparatus 21 of the operating company 2 via the telephone network.

The server apparatus 21 of the operating company 2 receives the traveling distance (step S401) and the traveling time (step S402) transmitted from the bicycle controller section 11 via the telephone network.

The server apparatus 21 receives current positional information (step S403) indicating the current position transmitted from the rental expired bicycle's bicycle controller section 11 via the artificial satellites. At step 403, a return location of the rental expired bicycle is specified. It is possible to determine whether that bicycle is returned to the specified return location or is dropped off.

The computer 211 of the server apparatus 21 determines distance coefficient k1 and time coefficient k2 (step S404) according to traveling distance L1, traveling time Tx, and the return location. The computer then calculates the bicycle's fee M1 (step S405) by applying traveling distance L1, traveling time Tx, distance coefficient k1, and time coefficient k2 to the above-mentioned equation (1).

As mentioned above, the computer 211 of the server apparatus 21 determines whether the balance in the virtual currency 130 is enough to settle fee M1 (step S406). When determining that the balance is insufficient, the computer transmits reminder information (reminder message) to confirm the payment intention of the bicycle's member user.

The computer 211 in the server apparatus 21 creates the balance update information when determining that the balance in the virtual currency 130 is enough to settle fee M1 at step S406 or after issuing a reminder at step S407. The computer transmits that information to the intended bicycle controller section 11 to update the balance in the virtual currency 130 (step S408).

In this manner, it is possible to determine the bicycle fee according to the actual usage of the bicycle based on the traveling distance and the traveling time for riding a bicycle.

In the bicycle rental system according to this embodiment, GPS allows the server apparatus in the operating company 2 to always accurately manage current positions of all rent-a-bicycles. This enables a complete drop-off service of bicycles. Consequently, there is no need to secure many return locations for bicycles.

A member who wants to rent a bicycle can find a location of a nearby bicycle according to information from a member terminal in the operating company 2. The member need not go to a place for renting bicycles and can fast rent and use a bicycle. The bicycle fee is calculated according to the traveling distance and the traveling time of a bicycle. It is possible to set a reasonable fee and provide a fee structure beneficial to users.

Different bicycle fees can be set depending on whether the user drops off a bicycle or returns it to a specified return location. It is possible to provide a distinguished fee structure and constitute a bicycle rental system advantageous to users.

The bicycle is provided with a lock mechanism having a permission capability. This lock mechanism allows only an authenticated and permitted member to unlock the bicycle. Accordingly, it is possible to prevent a user other than members from illegally using bicycles in the bicycle rental system and always provide only members with nearby bicycles.

[Other examples]

The above-mentioned embodiment establishes the bicycle rental system as simply as possible by using existing infrastructures. However, the present invention is not limited thereto and may be embodied as follows.

[Automatically detecting the member's current position]

In the above-mentioned embodiment, the server apparatus 21 of the operating company 2 is notified of the position or the member number of a member who wants to rent a bicycle through a member's own action. For example, the member orally telephones to the operating company by using the member's mobile telephone terminal 3. Alternatively, the member operates keys on the mobile telephone terminal 3. However, the present invention is not limited thereto.

For example, it may be preferable to have the member carry a mobile communication terminal equipped with a GPS apparatus and manage the member's current position in the same manner as for bicycles. In this case, it is not necessary to always manage the member's current position. Only when a request is issued to provide the bicycle's positional information, it may be preferable to detect the member's current position by using GPS and transmit the detected position to the server apparatus 21 of the operating company 2.

The current position of the mobile telephone terminal 3 may be detected by using signals from a plurality of nearby base stations. The detected current position may be transmitted to the server apparatus 21 of the operating company 2. In this case, the system is configured to receive signals from at least three adjacent base stations. It is possible to locate the member's position by using the triangulation method based on the received signals and positions of the base stations which transmitted the signals.

Also in this case, it is not necessary to always manage the member's current position. Only when a request is issued to provide the bicycle's positional information, it may be preferable to detect the member's current position based on signals from adjacent base stations and transmit the detected position to the server apparatus 21 of the operating company 2.

[Not releasing the lock mechanism]

At the member registration, there may be a case where a registered member does not indicate a financial institution's account number. Further, there may be a case where the registered account leaves no balance and the balance in the virtual currency 130 is 0 or less. In these cases, no permission information is transmitted. By doing so, it is possible to rent bicycles only when the virtual currency or the registered member's account ensures a sure settlement.

[Integrating the bicycle retrieval number with the member number]

The member number may be used as a bicycle retrieval number. When a member is provided with the positional information, that member's bicycle is given the member number of the member who requested to provide the positional information. By using this member number, it is possible to retrieve nearby bicycles.

[Other methods of calculating the fee]

The calculation of the bicycle fee is not limited to the aforementioned equation (1). Average arrival time T0 is predetermined corresponding to the bicycle's traveling distance (mileage) L1. For example, average arrival time T0 is eight minutes when traveling distance L1 is 1 km. Average arrival time T0 is 15 minutes when traveling distance L1 is 2 km, and so on.

The bicycle fee is calculated depending on whether actual traveling time Tx corresponding to actual traveling distance L1 is later or earlier than average arrival time T0 corresponding to traveling distance L1. Namely, the fee is determined as follows.

When Tx < T0, the bicycle turnover rate is improved and the fee is discounted.

When Tx > T0, the bicycle turnover rate is degraded and an extra charge is added to the fee.

Specifically, fee M2 is found by the following equation (2).

$$\text{Fee } M2 = L1 \times k1 + (Tx\text{-}T0) \times k2 \qquad (2)$$

In this case, coefficient k1 is used for converting the traveling distance to a fee. Coefficient k2 is used for converting a difference between actual traveling time Tx and average arrival time T0 to a fee. Also in this case, it is possible to provide a fee structure beneficial to users according to actual usage situations of bicycles.

This example uses traveling time Tx but does not use the time during which the bicycle wheel was rotating. A start point is assumed to be the time when the lock mechanism 117 is unlocked. An end point is assumed to be the time when the end key 108 of the bicycle controller section 11 is operated. It may be preferable to assume the time between the start point and the end point to be the traveling time (usage time) for measurement.

In this case, the usage time is independent of whether the member was actually riding the bicycle. The fee paid by the member user is a sum of the fee for the time occupied by the member and the fee corresponding to the actual mileage.

While the above-mentioned embodiment measures the traveling time equivalent to the time during which the bicycle wheel is rotating, the present invention is not limited thereto. For example, it may be preferable to provide the bicycle saddle with a pressure sensor and measure the traveling time equivalent to the time during which a user sits on the saddle. Alternatively, it may be preferable to measure the traveling time equivalent to the time during which both the front and rear wheels of the bicycle are rotating.

[Measuring the traveling distance and the traveling time in the operating company]

In the above-mentioned embodiment, the traveling distance measuring section 114 and the traveling time measuring section 115 of the bicycle controller section 11 measure the traveling distance and the traveling time for a bicycle. Namely, both the traveling distance and the traveling time are measured on the bicycle side and are transmitted to the server apparatus 21 of the operating company 2. However, it is also possible to measure the traveling distance and the traveling time in the server apparatus 21 of the operating company 2.

As mentioned above, the bicycle controller section 11 on each bicycle detects the current position of its own at a specified time interval by using the GPS capability. The bicycle controller section 11 transmits information indicating the detected current position to the server apparatus 21 in the operating company 2. Even after the lock mechanism 117 is unlocked, for example, the bicycle controller section 11 continues periodically detecting and transmitting the current position under control of the server apparatus 21 in the operating company 2.

A traveling distance is found from the current bicycle position and the most recent current position at a specified time interval, e.g., every several minutes. The final traveling distance can be measured by totaling up found traveling distances.

Regarding the traveling time, when the present boarding location differs from the previous one, the traveling time is assumed to be equivalent to a period from the time when the previous boarding location is detected to the time when the present boarding location is detected. When the present boarding location is the same as the previous one, the traveling time does not include a period from the time when the previous boarding location is detected to the time when the present boarding location is detected. In this manner, the traveling time can be measured.

The server apparatus 21 in the operating company 2 can calculate the bicycle fee by using the above-mentioned equation (1) or (2) based on the measured traveling distance and traveling time.

Another method is available. After the lock mechanism 117 is unlocked, the current position and the current time are detected at a specified time interval only while the bicycle wheel is rotating and the bicycle is moving. The detected position and time are transmitted to the server apparatus 21 in the operating company 2. In this manner, the server apparatus 21 can measure the mileage and the driving time.

The operating company 2 can more accurately measure the traveling distance and the traveling time by appropriately shortening a time interval for detecting the current position and the current time.

The current position and the current time are detected when the bicycle starts moving and it stops. The detected position and time are transmitted to the server apparatus 21 in the operating company 2. The mileage is assumed to be equivalent to a difference between the current position when the bicycle starts moving and the current position when it stops. It is also possible to measure the driving time by assuming it to be a difference between the current time when the bicycle starts moving and the current time when it stops.

If there are found current positions and times when the bicycle starts moving and when it stops, the server apparatus 21 can relatively accurately measure the mileage and the driving time. Apparently, other methods may be used for allowing the server apparatus 21 in the operating company 2 to measure the bicycle's traveling distance and time.

[Other examples of communication paths]

In the above-mentioned embodiment, GPS detects the current bicycle position. The information indicating the detected current position is transmitted to the server apparatus 21 in the operating company 2 via artificial satellites. It has been described that the other communication capabilities use the telephone network. However, the present invention is not limited thereto.

The artificial satellites may be used for all communication capabilities. The telephone network may be used for all communication capabilities except the GPS capability. Without using the telephone network, a dedicated communication network may be formed.

Without using GPS, each bicycle's bicycle controller section 11 or the member's mobile telephone terminal may receive signals from nearby base stations. Obviously, it may be preferable to detect the member's current position according to the received signals and positions of the base stations which transmitted these signals and transmit that current position to the server apparatus in the operating company 2.

[Authenticating members etc. on the bicycle]

In the above-mentioned embodiment, the server apparatus in the operating company 2 authenticates members or confirms the balance in the virtual currency. However, the present invention is not limited thereto. For example, when the server apparatus 21 in the operating company 2 receives a bicycle retrieval request from the member's mobile telephone terminal 3, the server apparatus 21 transmits the bicycle's positional information to the member's mobile telephone terminal 3. In addition, the relevant member's member number is transmitted to the bicycle to which the positional information was transmitted.

If the member enters the member number into the bicycle controller section 11 of the bicycle which is specified by the positional information, the bicycle's bicycle controller section 11 can perform authentication and confirm the balance. When the bicycle controller section 11 authenticates the member and confirms a sufficient balance in the virtual currency, the microcomputer 111 of the bicycle controller section 11 can control the lock control section 116 to unlock the lock mechanism under control of the lock control section 116. In this case, it is possible to decrease loads on the server apparatus in the operating company 2.

In the above-mentioned embodiment, at step S202 in FIG. 4, the bicycle receives movable body retrieval information of its own and flashes the LCD 121 on the bicycle controller section 11 to notify the member of the bicycle's position. However, the present invention is not limited thereto.

For example, a buzzer or alarm generator may be connected to the bicycle controller section 11 for notifying the member of the bicycle location by means of the buzzer or alarm sound. Further, a vibrator may be connected to the bicycle controller section 11 for notifying the member of the bicycle location by means of vibration. It may be also preferable to use a plurality of means such as light emission by LCD or LED, sound, and vibration for notifying the member of the bicycle location.

It has been described that the above-mentioned embodiment uses a virtual currency for settlement, but the present invention is not limited thereto. For example, a prepaid card may be used. Alternatively, a credit card or a cash card may be inserted into the bicycle controller section 11 for settlement. Furthermore, a fee may be settled in cash or may be automatically paid from the financial institution's account designated at the member registration.

[Other examples of authenticating members]

In the first embodiment, a member who wants to rent a bicycle is authenticated by transmitting permission information as member identification information from the member's mobile telephone terminal 3 to the operating company 2. However, the present invention is not limited thereto. As mentioned above, for example, the virtual currency records the member identification information and the balance for the virtual currency. When the virtual currency is loaded into the bicycle controller section 11, the bicycle mounted with this section may transmit the member identification information or this information and the balance to the operating company 2 for performing authentication.

Accordingly, in the bicycle rental system according to the first embodiment, there may be provided relatively many rentable bicycles which can be found relatively easily. In this case, the virtual currency 130 is loaded into an available bicycle found without retrieving bicycles by using the user's mobile telephone terminal 3.

The bicycle reads the member identification information or this information and the balance from the loaded virtual currency 130. The read information is transmitted to the operating company 2 for authentication. When the bicycle controller section 11 is notified of successful authentication, the microcomputer 111 of the bicycle controller section 11 controls the lock control section 116 to unlock the lock mechanism and enable the relevant bicycle to be used.

Namely, the system can dispense with the user's mobile telephone terminal 3. If it is difficult to find an available bicycle, as mentioned above, the user can use his or her mobile telephone terminal 3 to transmit a request for retrieving bicycles to the operating company and fast find a nearby available bicycle. This can save communication costs paid by users.

A recording medium can be used for recording a program executed on the microcomputer 111 in the above-mentioned bicycle controller section 11. By using this recording medium, it is possible to install the present invention's capabilities on many bicycles and use these capabilities. Specifically, the recording medium records a program executing processes for steps S201 through S210 as shown in FIGS. 4 through 6 and other programs which are modified as needed.

In this case, available recording media include semiconductor memory such as ROM, EEPROM, flash memory, etc. and various types of magnetic recording media, optical recording media, magneto-optical media, etc. When using magnetic recording media, optical recording media, magneto-optical media, etc., an apparatus for reading programs recorded thereon may be installed on the bicycle controller section 11 or may be configured to be connectable as needed.

Further, a recording medium can be used for recording a program executed on the computer 211 of the server apparatus 21 in the operating company 2. This is convenient, for example, when the server apparatus 21 for the operating company 2 is installed on different locations. Namely, it is possible to easily configure server apparatuses having the same capability in different locations.

Specifically, the recording medium records a program executing processes for steps S301 through S311 as shown in FIGS. 4 through 6 and other programs which are modified as needed.

Also in this case, available recording media include semiconductor memory such as ROM, EEPROM, flash memory, etc. and various types of magnetic recording media, optical recording media, magneto-optical media, etc. When using magnetic recording media, optical recording media, magneto-optical media, etc., an apparatus for reading programs recorded thereon may be installed on the server apparatus 21 or may be configured to be connectable as needed.

[Second embodiment]

The following explains an example of the present invention applied to a so-called car rental system which rents out cars as movable bodies. Even if the car is used as a movable body apparatus, the present invention can be embodied basically in the same manner as for the aforementioned bicycle rental system.

In the case of cars, however, a user needs to open the locked door of the car, get into the car, and start the engine. Unlike a bicycle, the user cannot drive a car just by unlocking it. The car rental system described below uses a key which differs from a door key for opening the car door and an engine key for starting the car engine.

[Outline of the car rental system]

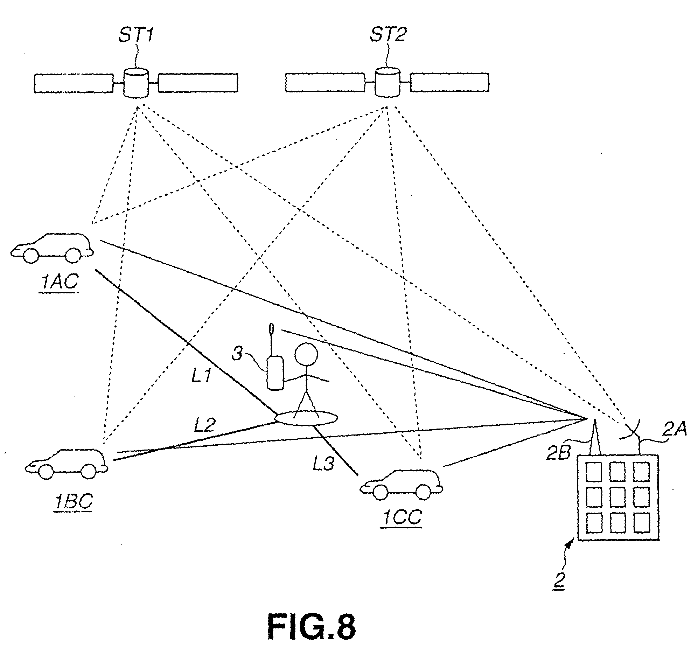

FIG. 8 outlines the car rental system using the movable body rental system, the movable body management system, the movable body apparatus, the movable body management apparatus, the movable body rental method, and the movable body management method according to the present invention.

As shown in FIG. 8, a plurality of cars 1AC, 1BC, 1CC, and so on is movable body apparatuses to be lent and is allowed to be dropped off freely at a proper parking place. The proper parking place means a place which is free from troublesome parking such as illegal parking or unauthorized parking on other's land.

Like bicycles in the aforementioned bicycle rental system, each of rent-a-cars (hereafter just referred to as cars) 1AC, 1BC, 1CC, and so on receives radio waves from at least two artificial satellites ST1 and ST2. Each car is mounted with a GPS apparatus which can accurately compute the current position by processing data supplied by the radio wave.

Like the aforementioned bicycle rental system, each of cars 1AC, 1BC, 1CC, and so on detects the current position of its own at a specified timing. Information indicating the detected current position is transmitted to the operating company 2 of the bicycle rental system via the artificial satellite.

The operating company 2 uses the movable body management apparatus. This apparatus receives information indicating the current position from cars 1AC, 1BC, 1CC, and so on transmitted via the artificial satellite and always accurately manages which car is located at which place. The information indicating the current position transmitted from cars 1AC, 1BC, 1CC, and so on also includes movable body identification information for identifying each of cars 1AC, 1BC, 1CC, and so on. Also in this car rental system, the operating company 2 always precisely manages current positions of all rent-a-cars. This enables a so-called car drop-off service which saves having to return a rented car to a specified return location.

Also as will be described later, a user may return the rented car to a specified return location. In this case, the rental fee is discounted.

Also in this car rental system like the above-mentioned bicycle rental system, a user who wants to use a car first contracts with the operating company 2 to obtain the membership. The member is given a member number (permission number) and purchases a virtual currency or a prepaid card for settling the car fee.

As described in the first embodiment, the virtual currency stores account information in virtual currency units only used for the car rental system. The use of this virtual currency unit can control a rate of conversion to the virtual currency, adjust the usage efficiency of the car rental system, etc. This is the same as for the above-mentioned bicycle rental system.

The following describes an example of using an IC card type virtual currency. In this car rental system, the IC card type virtual currency records member identification information such as a member number unique to each member and is used as a door key for opening the car door. The IC card type virtual currency is hereafter referred to as a virtual currency authentication key in the description to follow.

When actually renting a car, a member telephones the operating company 2 using his or her own mobile telephone terminal 3. The member notifies the operating company 2 of his or her member number or current position and requests to provide the positional information indicating the position of a nearby car.

The operating company 2 receives the request to provide the positional information indicating the position of a nearby car from the member, and then authenticates whether or not the requester is a member based on the member number. When the authentication is successful, the operating company 2 searches for an available car nearest to the current position of the requesting member and transmits the positional information about that car to the mobile telephone terminal 3 of the requesting member.

This makes it possible to fast and accurately notify the requesting member of the position of the nearest available car. As shown in the example of FIG. 8, there are three cars 1AC, 1BC, and 1CC near a member having the mobile telephone terminal 3. The requesting member is provided with the positional information about car 1CC nearest to that member.

The member reaches the position of the intended car according to the positional information from the operating company 2 and inserts the virtual currency authentication key into a loading gate provided on the car. As mentioned above, the virtual currency authentication key stores the payable prepaid account information etc. The car reads necessary information such as the member identification information, account information (balance information) etc. stored in the virtual currency authentication key. The car then transmits this information as authentication information (payable information) to the operating company 2 via the communication network such as a telephone network.

Based on the authentication information, the operating company 2 determines whether or not a user who reached the requesting car and inserted the virtual currency authentication key is a valid member and is capable of paying a fee (rental fee) caused by renting a car. When the member is determined to be solvent, the operating company unlocks the car door. Via the communication network, the operating company transmits permission information for starting the car engine and enabling the car to drive to the car which transmitted the information. When receiving this permission information, the car unlocks its door to enable its use.

The member gets into the car and starts its engine by using an engine key which is previously provided by the operating company or is prepared at a specified position in the car. Thus, like an ordinary car, the member can drive the car to an intended destination.

In this manner, the operating company 2 for the car rental system can permit releasing the door lock on the car and starting the engine. Namely, a remote control operation from the operating company 2 releases the door lock on the car and starts the engine.

When the door lock is released and the engine is started, the car starts measuring the traveling distance and the traveling time (driving time). Thereafter, the member may stop using the car when it arrives at an intended destination. At this time, the member takes specified actions such as returning the engine key to the stop position and removing it or operating an end button switch (service termination button switch) provided on the car.

When the member takes specified actions to stop using the car, this car is locked to be unmoved. In addition, the car transmits the measured traveling distance and traveling time to the operating company 2 via the communication network. Based on the transmitted traveling distance and traveling time, operating company 2 calculates the car fee (rental fee) and performs settlement such as subtracting the balance from the virtual currency authentication key inserted into the car used.

The car rental system according to this embodiment uses GPS to detect current positions of all cars to be rented. The current positions are transmitted to the operating company 2 via artificial satellites, making it possible to manage which car is located at which position. As mentioned above, it is possible to provide a car drop-off service and notify members of positions of nearby cars fast and accurately.

As mentioned above, the system can calculate the car fee based on the information indicating the actual usage of cars such as the traveling distance and the traveling time of the rented car. A conventional system offers a fixed fee based on usage times even if the car traveling distances differ. Unlike this system, the system according to the embodiment can properly calculate and settle the fee without causing feelings of inequality.

The communication network such as already prepared telephone networks is used for communication among the member's mobile telephone terminal 3, each of cars 1AC, 1BC, and 1CC, and the operating company 2. Appropriate information communication is available among the member's mobile telephone terminal 3, each of cars 1AC, 1BC, and 1CC, and the operating company 2.

[Movable body apparatus (car control section)]

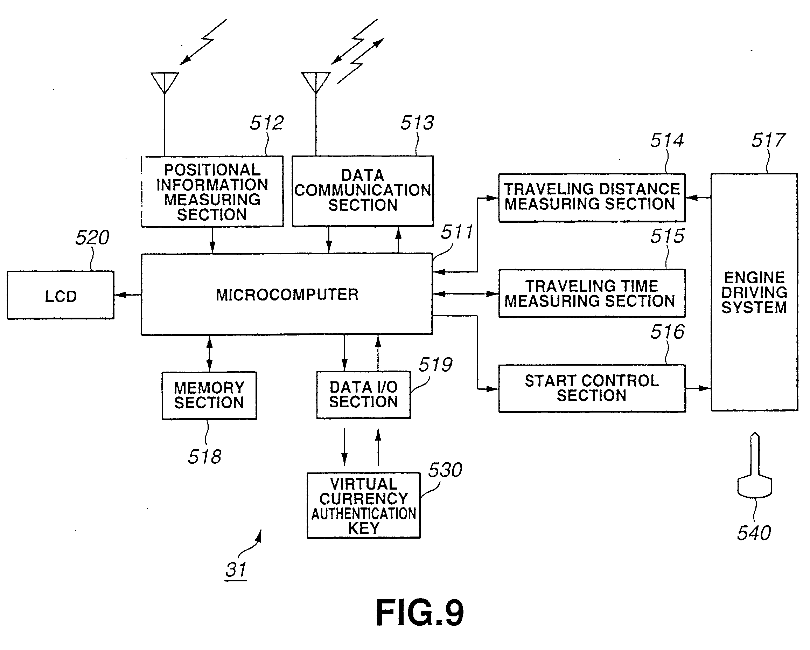

Then, the movable body apparatus according to this embodiment will now be described. In this embodiment, the movable body apparatus is a car. As mentioned above, the car is mounted with a car controller section 31 for performing processes such as detecting its own current position. FIG. 9 is a block diagram for explaining the car controller section 31 mounted on the car as the movable body apparatus in this embodiment.

As shown in FIG. 9, the car controller section 31 in this embodiment mounted on cars 1AC, 1BC, 1CC, and so on includes a microcomputer 511. The microcomputer 511 controls each part of the car controller section 31.

As shown in FIG. 9, the car controller section 31 according to this embodiment comprises a position measuring section 512, a data communication section 513, a traveling distance measuring section 514, a traveling time measuring section 515, an engine start control section (hereafter referred to as a start control section) 516, an engine driving system 517, a memory section 518, a data I/O section 519 having a loading section for virtual currency authentication keys, and an LCD 520.

A member purchases a virtual currency authentication key 530 beforehand. As mentioned above, the virtual currency authentication key 530 stores member identification information and account information corresponding to the amount paid by the member. Normally, a member carries the virtual currency authentication key 530. As will be described later, the virtual currency authentication key is loaded into the virtual currency authentication key loading section provided on a car to be rented and is used for settlement when the member stops using the car.

In FIG. 9, the position measuring section 512 is equivalent to a GPS apparatus and receives a radio wave from the artificial satellite. The position measuring section 512 calculates data provided from the received radio wave to detect the current position of a local apparatus, i.e., a car which mounts this section. Information indicating the current position detected by the position measuring section 512 is supplied to the data communication section 513 via the microcomputer 511.

The data communication section 513 transmits the information indicating the current position of its own detected at a specified timing to the operating company 2 via artificial satellites. Further, the data communication section 113 implements communication with the operating company 2 or the member's mobile telephone terminal through the use of a communication network, i.e., a telephone network in this embodiment.

The traveling distance measuring section 514 measures a car's traveling distance (mileage). In this embodiment, for example, the traveling distance is measured based on the circumference length and the number of revolutions of a car wheel. The mileage measured by the traveling distance measuring section 514 is supplied to the microcomputer 511 and is managed there.

The traveling time measuring section 515 measures the traveling time (driving time) and is equipped with a timer (clock circuit). In this embodiment, the traveling time measuring section 515 includes a sensor for detecting whether the relevant car's wheel is rotating. This section measures the time during which the car wheel is rotating to determine the traveling time. The measured traveling time is supplied to the microcomputer 511 and is managed there.

The start control section 516 controls the engine driving system 517 of each car under control of the microcomputer 511. By doing so, the start control section 516 locks a car mounted with the car controller section 31 to disable the engine driving system from starting or unlocks the car to enable the engine driving system to start. The engine driving system chiefly comprises a car engine, an engine ignition section (mechanism for driving the engine), an electrical system for controlling these, etc.

The memory section 518 stores and maintains various information. For example, this section records various types of data and parameters such as the traveling distance and the traveling time. It is possible to read and use data or parameters recorded on the memory section 518 as needed and delete unnecessary data or parameters.

The data I/O (Input/Output) section 519 includes the virtual currency authentication key loading section, reads necessary information such as member identification information and account information (balance information) recorded in the virtual currency authentication key, and supplies this information to the microcomputer 511. Based on balance update information from the microcomputer 511, the data I/O section 519 updates the balance recorded in the virtual currency authentication key.

The data I/O section 519 works as an interface between the virtual currency authentication key 530 and the microcomputer 511 in the car controller section 31. The LCD 520 connected to the microcomputer 511 displays various guidance messages, alarm messages, and other necessary information under control of the microcomputer 511.

[Movable body management apparatus in the operating company 2]

The server apparatus is installed in the operating company 2 of the car rental system according to this second embodiment and functions as a movable body management apparatus. This server apparatus is the same as the server apparatus 21 in the bicycle rental system according to the aforementioned first embodiment.

Namely, the server apparatus which is installed in the operating company 2 of this car rental system and functions as a movable body management apparatus is configured in the same manner as the server apparatus 21 in FIG. 3. This server apparatus comprises the computer 211, the positional information measuring section 212, the data communication section 213, the hard disc 214 for forming a management database, and the monitor apparatus 215. As a movable body management apparatus installed in the operating company 2 of this car rental system, the server apparatus 21 is described on the premise that it has the configuration as shown in FIG. 3.

The server apparatus 21 of this car rental system accurately identifies and manages current positions of many cars in this car rental system. In addition, the server apparatus 21 retrieves a car nearest to the member, authenticates the member, unlocks the car, and remotely controls the car to enable its engine. Further, the server apparatus 21 calculates a car fee based on the traveling distance and the traveling time transmitted from the car controller section 31.

Operations of respective elements are the same as those explained for the bicycle rental system according to the above-mentioned first embodiment with reference to FIG. 3. The description thereof is omitted here.

[Car rental system operations]

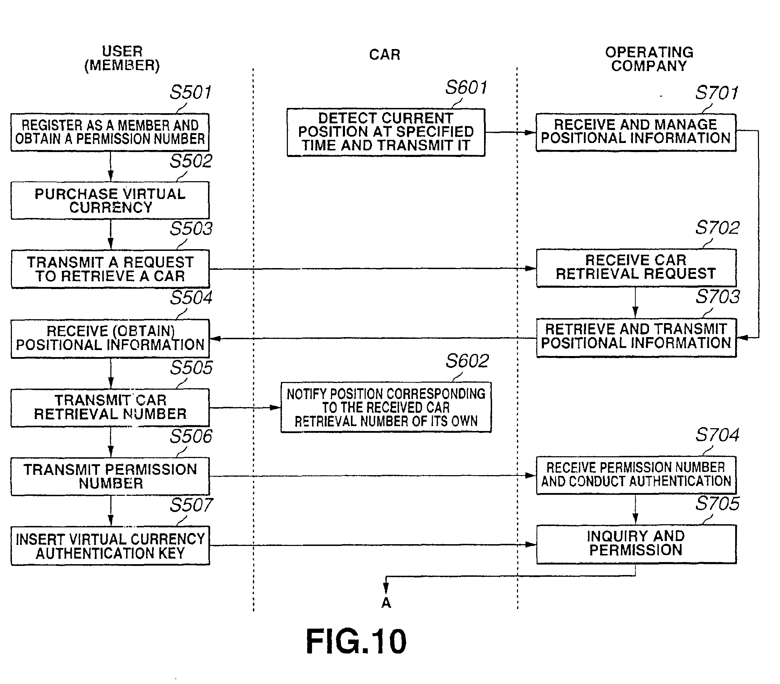

The following describes operations of the car rental system according to this embodiment with reference to flowcharts in FIGS. 10 to 12. In these figures, steps between S501 and S511 correspond to processing for a member as a rent-a-car user.

Steps between S601 and S610 correspond to processing in the car controller section 31 of the rent-a-car. Steps between S701 and S711 correspond to processing in the operating company 2.

As mentioned above, each rent-a-car in this car rental system is mounted with the car controller section 31. The position measuring section 512 in the car controller section 31 receives a radio wave from the artificial satellite at a specified interval. The position measuring section 512 analyzes data supplied from the received radio wave to detect the accurate current position of its own and supplies the microcomputer 511 with this positional information.

The microcomputer 511 transmits information indicating the current position obtained from the position measuring section 512 and its own identification information (movable body identification information) via the data communication section 513. This information is sent to the operating company 2 via the artificial satellites. The process at step S601 in FIG. 10 is equivalent to detecting and transmitting the current position of its own car. This process is periodically performed in the car controller section 31 mounted on each car.

Using the antenna 2A, the operating company 2 receives each car's current positional information transmitted from each car's car controller section 31 via the artificial satellites and supplies this information to the positional information measuring section 212. The positional information measuring section 212 analyzes the current positional information received from each car, detects the current positional information about each car and the movable body identification information, and supplies these pieces of information to the computer 211.

The computer 211 stores or updates each car's current positional information from the positional information measuring section 212 and the movable body identification information by keeping the correspondence therebetween in the management DB on the hard disc 214 for management. The process at step S701 in FIG. 10 is equivalent to receiving and managing the current positional information transmitted from each car's car controller section 31.

In this way, the car rental system according to this embodiment always manages the current position of each car. Incidentally, a user who wants to use a car in the car rental system according to this embodiment first registers for the operating company 2 as a member to obtain a member number or a permission number (step S501).

For the member registration, an application form is submitted to the operating company 2. The application form should contain an address, name, age, financial institution's account number, etc. of a user who wants to rent a car. To complete the member registration, the user may directly visit the operating company 2. Alternatively, the user may mail the application form filled with necessary items to the operating company 2.

After the member registration is completed, the server apparatus 21 in the operating company 2 manages the member's information such as his or her address, name, age, financial institution's account number, etc. by recording this information in the management DB on the hard disc 214.

After completion of the member registration, a new member is given a permission number and purchases the virtual currency, and records information equivalent to the purchased amount in the virtual currency authentication key 530 (step S502). When the registered member who owns the virtual currency authentication key 530 wants to use a car in the car rental system, that member telephones to the operating company 2 by using his or her own mobile telephone terminal 3. By doing this, the member notifies the operating company 2 of his or her current position, permission number, etc. and requests to retrieve a nearby car. Namely, the member sends a car retrieval request to the operating company 2 (step S503).

The operating company 2 receives the car retrieval request from the member's mobile telephone terminal 3 via the antenna 2B and the data communication section 213 (step S702). The computer 211 references the management DB on the hard disc 214 and retrieves an available car nearest to the member who sent the car retrieval request. The operating company transmits the positional information, the identification number (car retrieval number), etc. about the nearby car to the telephone network via the data communication section 213 and the antenna 2B, and finally to the requesting member's mobile telephone terminal 3 (step S703).

The member's mobile telephone terminal 3 receives the positional information and the identification number (car retrieval number or password) about the nearby car from the operating company 2 (step S504). The member hangs up the mobile telephone terminal 3 to disconnect the telephone line and searches for the nearby car based on the received positional information. The member picks up the mobile telephone terminal 3 and enters the car's identification number (car retrieval number) obtained at step S504 to call the nearby car (step S505).

The car's car controller section 31 receives a car retrieval number via the data communication section 512. At this time, the microcomputer 511 flashes the LCD 520, or lights or flashes a headlight or a hazard lamp to notify the member of the car position (step S602).

In this embodiment, when the member reaches a place where the intended bicycle is stationed, the member telephones to the operating company 2 by using his or her mobile telephone terminal 3. The member enters the permission number (member number) assigned to him or her by operating dial keys on the mobile telephone terminal 3, transmits this number to the operating company 2, and disconnects the line (step S506).

The member inserts (loads) his or her virtual currency authentication key 530 into the data I/O section 519 of the car's car controller section 31. As mentioned above, the data I/O section 519 reads the member identification information and the account information (balance information) recorded on the virtual currency authentication key 530 and supplies this information to the microcomputer 511. The microcomputer 511 transmits the member identification information and the account information as authentication information(payable information) to the operating company 2 via the data communication section 513 (step S507).

In the operating company 2, the computer 211 in the server apparatus 21 receives the permission number via the data communication section 213 and authenticates whether the member is assigned a valid permission number (step S704). Further, the computer 211 in the server apparatus 21 determines whether the account information included in the authentication information transmitted at step S507 indicates a payable amount, i.e., whether the member can use a car (step S705).

When the authentication is successful at step S705 and the virtual currency authentication key 530 keeps a sufficient balance, the computer 211 in the server apparatus 21 transmits the permission information to the car controller section 31 loaded with the virtual currency authentication key via the data communication section 213.

The processes at steps S506 and 704 are also available by performing communication between the car controller section 31 and the server apparatus 21 in the operating company 2 without using the member's mobile telephone terminal 3. Namely, the virtual currency authentication key 530 records not only the account information, but also the member identification information. As mentioned above, it may be preferable to transmit the member identification information and the account information (balance information) to the server apparatus 21 in the operating company 2. This allows the server apparatus 21 in the operating company 2 to authenticate the member and inquire the balance of the virtual currency authentication key 530.

The reason for providing processes at steps S506 and S704 in this second embodiment is to demonstrate that the second embodiment can be configured in the same manner as the aforementioned first embodiment. Namely, the user can find a car to be rented by using his or her own mobile telephone terminal also in the car rental system according to the second embodiment.

The car controller section 31 receives the permission information via the data communication section 513 and releases the door lock to allow the door to be opened. In addition, the car controller section 31 controls the start control section 516 to enable the engine to start by using the engine key 540 (step S603). The microcomputer 511 in the car controller section 31 controls the traveling distance measuring section 514 to start measuring the traveling distance and controls the traveling time measuring section 515 to start measuring the traveling time (step S604).

The microcomputer 511 determines whether the member user has finished using the car, i.e., whether specified actions are taken to finish using the rented car (step S605). When it is determined that the specified actions for terminating the use of the car are not taken as a result of the process at step S605, the process from step S604 is repeated to continue measuring the car's traveling distance and traveling time.

When it is determined that the specified actions for terminating the use of the car are taken as a result of the process at step S605, the microcomputer 511 controls the start control section 516 to lock the engine driving system 517 and disable it from moving (step S606). At this point, the use of the car terminates.

As mentioned above, the traveling distance measuring section 515 has measured the traveling distance. The traveling time measuring section 516 has measured the traveling time. The microcomputer 511 in the car controller section 31 transmits the thus measured traveling distance and time to the telephone network in this embodiment via the data communication section 513, then finally to the operating company 2 (step S607).

The operating company 2 receives the information indicating the mileage and the driving time from the car controller section 31 (step S706). Using the received information, the operating company's server apparatus 21 calculates the car fee (step S707). In the same manner as for the bicycle rental system according to the aforementioned first embodiment, the fee calculation at step S707 is based on the traveling distance and the traveling time of the car that has been used.

The computer 211 in the operating company's server apparatus 21 determines whether the virtual currency authentication key 530 keeps the balance sufficient to pay the fee (step S708). This process is based on the account information (payable information) in the virtual currency authentication key 530 received at step S705 and the fee calculated at step S707.

When it is determined that the balance of the virtual currency authentication key 530 is insufficient as a result of the process at step S708, the computer 211 in the server apparatus 21 creates reminder information. The computer transmits this information to the member's mobile telephone terminal 3 via the data communication section 213 (step S709). Transmitting the reminder information at step S709 warns the member user that the balance of the virtual currency authentication key 530 is insufficient.

The member user's mobile telephone terminal 3 receives the reminder information from the operating company's server apparatus 21 (step S508). The mobile telephone terminal 3 displays a message on its LCD or uses a voice capability to notify the member of the insufficient balance remaining in the virtual currency authentication key 530 loaded into the rented car.

The member transmits his or her payment intention to the server apparatus 21 in the operating company 2 (step S509) by operating his or her mobile telephone terminal 3, e.g., operating specified keys thereon. The server apparatus 21 in the operating company 2 receives the payment intention from the member's mobile telephone terminal 3 (step S710).

When the balance of the virtual currency authentication key 530 is insufficient in this embodiment, the server apparatus 21 in the operating company 2 transmits a reminder to the member and confirms the member's payment intention. The member user is accurately notified of the state of the car fee payment, eliminating worry about the payment.

Namely also in this embodiment, only members can use rent-a-cars. According to the above-mentioned processes at steps S506 and S704, the server apparatus 21 in the operating company 2 can manage which car is rented out to which member.

When the balance of the virtual currency authentication key 530 is insufficient, the shortage can be adjusted later on. If a member user is not notified of the insufficient balance as needed, the member cannot know when the balance shortage occurred, and may worry about this.

A sequence of processes at steps S709, S508, S509, and S710 is used to issue a reminder to notify that the balance in the virtual currency authentication key 530 has become insufficient. The system transmits a reminder to notify the member of the insufficient balance in the virtual currency authentication key 530 by requesting this member to enter confirmation for the reminder. This notification allows the member to recognize that he or she must adjust the shortage.

The computer 211 in the server apparatus 21 may determine that the virtual currency authentication key 530 does not record an insufficient balance at step S708. In addition, the computer may receive the payment intention from the member at step S710. When both of these conditions are satisfied, that computer creates balance update information for the virtual currency authentication key 530 according to the car fee calculated at step S707. The computer then transmits that information to the car controller section 31 of the rental expired car (step S711).

Here, the balance update information indicates the final balance obtained by subtracting the most recent fee from the first balance. The rental expired car's car controller section 31 receives the balance update information from the server apparatus 21 via the data communication section 513 and supplies this information to the microcomputer 511 (step S608).

The microcomputer 511 uses the data I/O section 519 to update the balance for the virtual currency authentication key 530 loaded in this section (step S609). Due to this operation, the virtual currency authentication key 530 maintains the final balance with the most recent car fee subtracted.

After updating the balance in the virtual currency authentication key 530, the microcomputer 511 in the car controller section 31 controls the loading section for virtual currency authentication keys in the data I/O section 519 to eject the virtual currency authentication key 530 from the loading section and return it to the member (step S610). The member receives the virtual currency authentication key 530 ejected from the loading section for virtual currency authentication keys in the car controller section 31 (step S510). This completes the use of the rented car and the settlement (step S511).

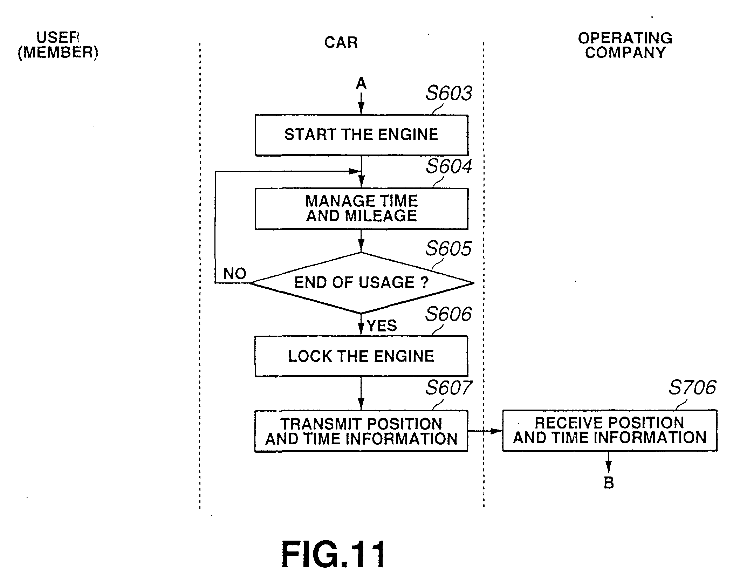

At step S606 in FIG. 11, it is necessary to confirm that the car completely stops and lock the engine driving system 517. It may be preferable to warn a user, e.g., by displaying a confirmation message for locking on the LCD 520 in the car controller section 31 and then lock the car. Further, it may be preferable to request the user to enter confirmation after warning.

The fee calculation at step S707 is the same as for the bicycle rental system according to the aforementioned first embodiment. When a rented car uses liquid fuel such as gasoline, light oil, etc. in the car rental system according to this second embodiment, it may be preferable to calculate the fee by considering the amount of liquid fuel consumed. When an electric car is rented, it may be preferable to calculate the fee by considering the electric power consumption.

As it is apparent from these, in the car rental system according to this second embodiment, GPS allows the server apparatus in the operating company 2 to always accurately manage current positions of all rent-a-cars. This enables a complete drop-off service of cars. Consequently, there is no need to secure many return locations for cars.

A member who wants to rent a car can find a location of a nearby car according to information from a member terminal in the operating company 2. The member need not go to a place for renting cars and can easily use a car.

The car fee is calculated according to the traveling distance and the traveling time of a car. It is possible to set a reasonable fee and provide a fee structure beneficial to users.

Different car fees can be set depending on whether the user drops off a car or returns it to a specified return location. It is possible to provide a distinguished fee structure and constitute a car rental system advantageous to users.

The car is provided with a lock mechanism having a permission capability. This lock mechanism allows only an authenticated and permitted member to unlock the car. Accordingly, it is possible to prevent a user other than members from illegally using cars in the car rental system and always provide only members with nearby cars.

Also in the car rental system according to this second embodiment, it may be preferable to automatically detect a position of the user carrying the mobile telephone terminal 3 and notify this user of a nearby retrieved car.

At the member registration, there may be a case where a registered member does not indicate a financial institution's account number. Further, there may be a case where the registered account leaves no balance and the balance in the virtual currency authentication key 530 is 0 or less. In these cases, no permission information is transmitted. By doing so, it may be also preferable to rent cars only when the virtual currency authentication key 530 or the registered member's account ensures a sure settlement.

Also in the car rental system according to this second embodiment, the member number may be used as a car retrieval number. When a member is provided with the positional information, that member's car is given the member number of the member who requested to provide the positional information. By using this member number, it is possible to retrieve nearby cars.

Like the bicycle rental system according to the above-mentioned first embodiment, the car rental system according to this second embodiment can provide the fee calculation considering the average arrival time.

The second embodiment measures the time during which the car wheel is rotating to determine the traveling time. However, the present invention is not limited thereto. For example, a sensor may be provided on a car seat etc. As the traveling time, it may be preferable to measure the time during which the user sits on the car seat and the engine is working.

Like the bicycle rental system according to the above-mentioned first embodiment, the car rental system according to this second embodiment may transmit information indicating the current car position from the car at a specified interval. The server apparatus 21 in the operating company 2 may measure and manage the traveling distance and the traveling time of the car.

In the car rental system according to this second embodiment, the artificial satellites may be used for all communication capabilities. The telephone network may be used for all communication capabilities except the GPS capability. Without using the telephone network, a dedicated communication network may be formed.

Without using GPS, each car's car controller section 31 or the member's mobile telephone terminal may receive signals from nearby base stations. Obviously, it may be preferable to detect the member's current position according to the received signals and positions of the base stations which transmitted these signals and transmit that current position to the server apparatus in the operating company 2.

The car rental system according to this second embodiment also performs authentication as follows. When the server apparatus 21 in the operating company 2 receives a car retrieval request from the member's mobile telephone terminal 3, the server apparatus 21 transmits the car's positional information to the member's mobile telephone terminal 3. In addition, the relevant member's member number is transmitted to the car to which the positional information was transmitted.

If the member enters the member number into the car controller section 31 of the car which is specified by the positional information, the car's car controller section 31 can perform authentication and confirm the balance.

When the car controller section 31 authenticates the member and confirms a sufficient balance in the virtual currency authentication key, the microcomputer 511 of the car controller section 31 can control to release the door lock and make the engine ready to start. In this case, it is possible to decrease loads on the server apparatus in the operating company 2.

Also in the car rental system according to this second embodiment, a buzzer or alarm generator may be connected to the car controller section 31 of the car which received movable body retrieval information of its own. It may be preferable to notify the member of the car location by means of the buzzer of alarm sound. It may be also preferable to notify the member of the car location by using a plurality of means such as vibration, light, sound, etc.

It has been described that this second embodiment uses a virtual currency authentication key for settlement, but the present invention is not limited thereto. For example, a prepaid card may be used. Alternatively, a credit card or a cash card may be inserted into the car controller section 31 for settlement. Furthermore, a fee may be settled in cash or may be automatically paid from the financial institution's account designated at the member registration.

[Other examples of the car controller section 31]

The car controller section 31 is mounted on each car constituting the car rental system as shown in FIG. 9 according to the second embodiment and is configured to use the virtual currency authentication key 530 and the engine key 540. However, the present invention is not limited thereto. It is also possible to use a key (hereafter referred to as a common key) integrating the virtual currency authentication key and the engine key.

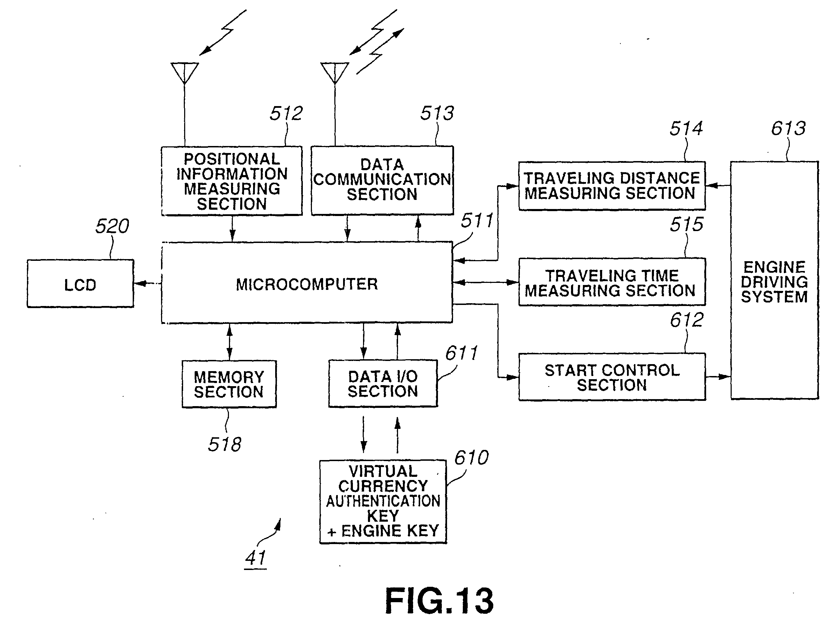

FIG. 13 is a block diagram showing a car controller section 41 using a common key 610. As shown in FIG. 13, the car controller section 41 of this example comprises the position measuring section 512, the data communication section 513, the traveling distance measuring section 514, the traveling time measuring section 515, the memory section 518, and the LCD 520. This configuration is the same as for the car controller section 31 according to the second embodiment in FIG 9. The detailed description of each element is omitted here.

The car controller section 41 differs from the car controller section 31 according to the second embodiment in the use of the common key 610. Further, the car controller section 41 uses a slightly different configuration of a data I/O section 611 for accepting the common key 610, an engine start control section (indicated as a start control section in FIG. 13) 612, and an engine driving system 613.

As mentioned above, the common key 610 is configured as an IC card which provides capabilities of the virtual currency authentication key and the engine key. For example, the loading section of the common key 610 is provided on a car door. When the common key 610 is loaded into this loading section, the data I/O section 611 reads the member identification information and the balance in the virtual currency written on the common key and transmits this information to the operating company 2 via the communication line.

The server apparatus 21 in the operating company performs authentication based on the authentication information from the car controller section. When the authentication is successful, the operating company 2 releases the door lock and transmits permission information for engine startup to the relevant car. When receiving the permission information via the data communication section 513, the microcomputer 511 in the car's car controller section 41 releases the door lock and starts the engine in the engine driving system via the start control section 612 to enable driving.

Alternatively, when receiving the permission information via the data communication section 513, the microcomputer 511 in the car's car controller section 41 releases the door lock and controls the engine driving system 613 via the start control section 612 to make the engine ready to start. To actually start the engine in this case, a user presses an engine start button switch or takes specified actions by using an engine key prepared in the car.

When the common key 610 is loaded into the loading section for the common key 610 provided on the car door, the data I/O section 611 reads the member identification information written on the common key. The data I/O section 611 then transmits this information to the operating company 2 via the communication line for authentication. When the authentication is granted, the operating company 2 releases the door lock for the car.

The following operations may be also preferable. The member pulls the common key 610 out of the loading section for the common key 610 provided on the car door, and then loads the common key into the loading section for the common key 610 provided in the car. The car system reads the member identification information and the balance of the virtual currency written in the common key and transmits this information to the operating company 2 for authentication including the balance of the virtual currency. When the authentication is granted, the engine is started or is made ready to start.

Even if the common key is used, one-time authentication in the operating company 2 may release the door lock and make the engine ready to start. Alternatively, the first authentication may release the door lock and the second authentication may make the engine ready to start. Namely, it may be preferable to provide complete remote control from the operating company 2.

The car rental system may use the virtual currency authentication key and the common key to release the door lock of the car to be used. After the door lock is released, a user may get into the car and enter the permission information transmitted to the mobile communication terminal 3 by using a keyboard provided in the car. It may be preferable to transmit the permission information as authentication information for the next authentication to be granted.

The car rental system can use remote control operations from the operating company 2 to release the door lock, start the engine, or make the engine ready to start, providing a highly reliable car rental system.

[Authentication patterns]

The aforementioned second embodiment uses the virtual currency authentication key 530 or the common key 610 and transmits the member identification information and the virtual currency balance recorded therein to the operating company 2. When authentication is granted, the operating company 2 releases the door lock and makes the engine ready to start by means of remote control operations. However, the present invention is not limited thereto.

For example, at the first time when the virtual currency authentication key or the common key is loaded, the member identification information or this information and the virtual currency balance are transmitted to the operating company 2. When authentication is granted, the operating company 2 releases the car door lock and permits the user to get into the car by means of remote control operations.

Then, when the engine key is operated, the member identification information or this information and the virtual currency balance may be retransmitted. Alternatively, an identification number of the car to be used may be transmitted for additional authentication. When the authentication is granted, the operating company 2 may use remote control operations to make the car engine ready to start and start the engine when the engine key is operated.

In this case, the virtual currency authentication key and the engine key may be provided as a common IC card. It may be also preferable to provide the virtual currency authentication key and the engine key separately.

The engine key can be an ordinary key instead of the IC card. In this case, when authentication is performed by operating the engine key, it is possible to store the car identification information in memory mounted on the car and transmit this information for authentication.

As mentioned above, it may be preferable to release the door lock and make the engine ready to start by means of remote control from operating company 2 based on one-time authentication in the operating company 2. Alternatively, it may be preferable to release the door lock by means of the first authentication using the virtual currency authentication key and then make the engine ready to start by means of the second authentication using the engine key. This means releasing the door lock and making the engine ready to start stepwise by means of remote control from operating company 2.

Authentication does not necessarily need communication between a car and the operating company. For example, the relevant car's door lock may be released when authentication is granted on that car by means of the virtual currency authentication key (IC card) which records the member identification information. A user who gets into the car loads the virtual currency authentication key into a specified loading section and allows the car to communicate with the operating company. When authentication is granted, the operating company may use a remote control operation to make that car engine ready to start.

Namely, a member can release the car door lock and get into the car. In order to actually drive the car, the user may be granted authentication and enable the car to be available by making the car engine ready to start.

When the virtual currency authentication key or the engine key is used, authentication can be granted from operating company 2. When the virtual currency authentication key is used, the authentication information includes the member identification information or this information and the account information such as the virtual currency balance, etc. When the engine key is used, the authentication information includes the member identification information or this information and the account information such as the virtual currency balance, or the car identification information, etc.

Like the above-mentioned first embodiment, this second embodiment authenticates a member who wants to rent a car by transmitting the permission information as member identification information from the member's mobile telephone terminal 3 to the operating company 2. However, the present invention is not limited thereto.

It is possible to omit authentication by means of the mobile telephone terminal. As mentioned above, the virtual currency authentication key or the common key 610 stores the member identification information and the virtual currency balance. It may be preferable to just transmit the member identification information or this information and the virtual currency balance for authentication from the car equipped with the car controller section 31 into which the virtual currency is loaded or the car controller section 41.

Accordingly, in the car rental system according to this second embodiment, there may be the case where cars are rented at relatively limited locations and rentable cars can be found relatively easily. In this case, the virtual currency authentication key 530 or the common key 610 is loaded into an available car found without retrieving cars by using the user's mobile telephone terminal 3.

The car reads the member identification information or this information and the balance from the virtual currency authentication key 530 or the common key. The read information is transmitted to the operating company 2 for authentication. When the car controller section 31 or 41 is notified of successful authentication, the microcomputer 511 of this section controls the start control section 516 to unlock the engine driving system 517 and enable the relevant car to be used.

Namely, the system can dispense with the user's mobile telephone terminal 3. If it is difficult to find an available car, as mentioned above, the user can use his or her mobile telephone terminal 3 to transmit a request for retrieving cars to the operating company and fast find a nearby available car. This can save communication costs paid by users.

A recording medium can be used for recording a program executed on the microcomputer 111 in the above-mentioned car controller section 31 or 41. By using this recording medium, it is possible to install the present invention's capabilities on many cars and use these capabilities. Specifically, the recording medium records a program executing processes for steps S601 through S610 as shown in FIGS. 10 through 12 and other programs which are modified as needed.

In this case, available recording media include semiconductor memory such as ROM, EEPROM, flash memory, etc. and various types of magnetic recording media, optical recording media, magneto-optical media, etc. When using magnetic recording media, optical recording media, magneto-optical media, etc., an apparatus for reading programs recorded thereon may be installed on the car controller section 31 or 41 or may be configured to be connectable as needed.

Further, a recording medium can be used for recording a program executed on the computer 211 of the server apparatus 21 in the operating company 2. This is convenient, for example, when the server apparatus 21 for the operating company 2 is installed on different locations. Namely, it is possible to easily configure server apparatuses having the same capability in different locations.

Specifically, the recording medium records a program executing processes for steps S701 through S711 as shown in FIGS. 10 through 12 and other programs which are modified as needed.

Also in this case, available recording media include semiconductor memory such as ROM, EEPROM, flash memory, etc. and various types of magnetic recording media, optical recording media, magneto-optical media, etc. When using magnetic recording media, optical recording media, magneto-optical media, etc., an apparatus for reading programs recorded thereon may be installed on the server apparatus 21 or may be configured to be connectable as needed.

In the aforementioned second embodiment, a car of the car rental system may use a tire lock as well as the door lock and the engine lock. When the door lock is used, the microcomputer 511 controls it. When authentication is granted, the microcomputer 511 controls the door lock mechanism to enable or disable the door lock.

When the engine lock is used, the microcomputer 511 controls the start control section 516 which controls the engine driving system 517 to enable or disable the lock. When the tire lock is used, the lock mechanism is provided near a tire in the same manner as the aforementioned first embodiment. It may be preferable to control the lock mechanism by means of the microcomputer 511 or the lock control section controlled by the microcomputer 511.

The lock includes a tire lock for bicycles and cars, and a door lock and an engine lock for cars as movable bodies.

The above-mentioned first and second embodiments have explained that the data communication section 213 of the operating company 2 provides communication between the user's mobile telephone terminal 3 and the bicycle or the car as a movable body apparatus, However, the present invention is not limited thereto. For example, it may be apparently preferable to independently provide a communication section for communication with the movable body apparatus and a communication section for communication with the user's mobile telephone terminal.

The above-mentioned embodiments have explained examples of applying the present invention to the bicycle rental system and the car rental system. However, the present invention is not limited thereto. When the movable body is a car, it may use liquid fuel such as gasoline, light oil, etc. or an electric car may be applicable. The present invention can be also applied to rental systems for various types of movable bodies such as motorcycles, motorized bicycles, etc.

Industrial Applicability

As mentioned above, since the present invention always manages movable body apparatus positions, it is possible to provide a complete drop-off service of movable body apparatuses. A user who wants to rent a movable body apparatus can be notified of its nearby location. The user need not go to a place for renting movable body apparatuses. Accordingly, the user can fast rent and use a movable body apparatus.

The fee can be calculated according to actual usage of the movable body apparatus. It is possible to set an accurate and clear fee and provide a fee structure beneficial to users.

The movable body apparatus can be provided with a lock mechanism having a permission capability. Accordingly, it is possible to prevent a user other than members from illegally using movable body apparatuses and alwaysprovide only members with nearby movable body apparatuses.

The present invention is applicable to an interoperable system of electric cars etc. expected to spread in the future and is effective as a specification to construct a system for recycling-oriented society products which are recycled through their use by a large number of people.

**Claims**

1. A movable body rental system having a plurality of movable body apparatuses and a movable body management apparatus to manage said plurality of movable body apparatuses, wherein
   each of said plurality of movable body apparatuses comprises:

   authentication information transmission means for transmitting authentication information to said movable body management apparatus;
   authentication result information reception means for receiving authentication result information returned in response to said authentication information;
   lock means for preventing the use of said movable body apparatus;
   lock control means for controlling said lock means according to said authentication result information received by said authentication result information reception means;
   distance measuring means for measuring mileage;
   distance information transmission means for transmitting information indicating mileage measured by said distance measuring means to said movable body management apparatus;
   time measuring means for measuring the driving time; and
   time information transmission means for transmitting information indicating the driving time measured by said time measuring means to said movable body management apparatus, wherein

   said movable body management apparatus comprises:

   authentication information reception means for receiving said authentication information from said movable body apparatus;
   authentication result information transmission means for transmitting authentication result information corresponding to said authentication information received by said authentication information reception means to said movable body apparatus,
   distance information reception means for receiving information indicating said mileage from said movable body apparatus;
   time information reception means for receiving information indicating said driving time from said movable body apparatus;
   fee calculation means for calculating a fee for said movable body apparatus according to said mileage received by said distance information reception means and said driving time received by said time information reception means; and
   settlement means for performing settlement processing according to the use of said movable body apparatus based on a calculation result of said fee calculation means.

2. The movable body rental system according to claim 1, wherein
   said movable body apparatus includes payable information acceptance means for accepting payable information;
   said authentication information transmission means transmits said payable information accepted by said payable information acceptance means as said authentication information to said movable body management apparatus;
   said lock control means controls said lock means to release the lock when receiving said permission information as said authentication result information from said movable body management apparatus via said authentication result information reception means;

said movable body management apparatus includes determination means for determining whether payment is possible based on said payable information as said authentication information received by said authentication information reception means from said movable body apparatus; and

said authentication result information transmission means, when said determination means determines payment is possible, transmits permission information as said authentication result information to said movable body apparatus.

3. The movable body rental system according to claim 2, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication and said determination means determines payment is possible.

4. The movable body rental system according to claim 1, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication.

5. The movable body rental system according to claim 1, wherein said fee calculation means of said movable body management apparatus differentiates said fee according to a position where said movable body apparatus is returned.

6. The movable body rental system according to claim 1, wherein said fee calculation means of said movable body management apparatus sets a higher fee when said movable body apparatus is returned to a position different from a predetermined return position than when it is returned to said return position.

7. The movable body rental system according to claim 1, wherein said fee calculation means of said movable body management apparatus calculates said fee based on said driving time and an average driving time which is determined according to said mileage.

8. A movable body rental system having a plurality of movable body apparatuses and a movable body management apparatus to manage said plurality of movable body apparatuses, wherein

each of said plurality of movable body apparatuses comprises:

authentication information transmission means for transmitting authentication information to said movable body management apparatus; authentication result information reception means for receiving authentication result information returned in response to said authentication information; lock means for preventing the use of said movable body apparatus; lock control means for controlling said lock means according to said authentication result information received by said authentication result information reception means; current position detection means for detecting a current position at a specified time interval; and current position transmission means for transmitting information indicating a current position each time said current position detection means detects it, and wherein

said movable body management apparatus comprises:

authentication information reception means for receiving said authentication information from said movable body apparatus;

authentication result information transmission means for transmitting an authentication result corresponding to said authentication information received by said authentication information reception means to said movable body apparatus;

current position reception means for receiving said current positional information from said movable body apparatus;

mileage measuring means for measuring mileage of said movable body apparatus by using said current positional information received by said current position reception means;

driving time measuring means for measuring the driving time of said movable body apparatus according to said current positional information received by said current position reception means;

fee calculation means for calculating a fee for said movable body apparatus according to said mileage measured by said mileage measuring means and said driving time measured by said driving time measuring means; and

settlement means for performing settlement processing according to the use of said movable body apparatus based on a calculation result of said fee calculation means.

9. The movable body rental system according to claim 8, wherein

said movable body apparatus includes payable information acceptance means for accepting payable information;

said authentication information transmission means transmits said payable information accepted by said payable information acceptance means as said authentication information to said movable body management apparatus;

said lock control means controls said lock means to release the lock when receiving said permission information as said authentication result information from said movable body management apparatus via said authentication result information reception means;

said movable body management apparatus includes determination means for determining whether payment is possible based on said payable information as said authentication information received by said authentication information reception means from said movable body apparatus; and

said authentication result information transmission means, when said determination means determines payment is possible, transmits permission information as said authentication result information to said movable body apparatus.

10. The movable body rental system according to claim 9, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication and said determination means determines payment is possible.

11. The movable body rental system according to claim 8, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication.

12. The movable body rental system according to claim 8, wherein said fee calculation means of said movable body management apparatus differentiates said fee according to a position where said movable body apparatus is returned.

13. The movable body rental system according to claim 12, wherein said fee calculation means of said movable body management apparatus sets a higher fee when said movable body apparatus is returned to a position different from a predetermined return position than when it is returned to said return position.

14. The movable body rental system according to claim 8, wherein said fee calculation means of said movable body management apparatus calculates said fee based on said driving time and an average driving time which is determined according to said mileage.

15. A movable body management system having a movable body apparatus and a movable body management apparatus, wherein
said movable body apparatus comprises:

current position measuring means for measuring a current position; and
current position transmission means for transmitting said current positional information obtained by said current position measuring means, and wherein

said movable body management apparatus comprises:

current position reception means for receiving current positional information about said movable body apparatus transmitted from said current position transmission means of said movable body apparatus;
provision request reception means for receiving a provision request for positional information about a nearby movable body apparatus transmitted from a user's mobile communication terminal; and
positional information transmission means for transmitting current positional information about a nearby movable body apparatus to said mobile communication terminal transmitting said provision request when said provision request reception means receives said provision request.

16. The movable body management system according to claim 15, wherein
said positional information transmission means of said movable body management apparatus transmits current positional information about said movable body apparatus and movable body retrieval information for retrieving said movable body apparatus; and
a user who wants to use said movable body apparatus can transmit movable body retrieval information for retrieving said movable body apparatus to said movable body apparatus via a mobile communication terminal owned by said user, and wherein
said movable body apparatus comprises:

retrieval information reception means for receiving said movable body retrieval information; and
notification means for notifying said user of a local apparatus position when said retrieval information reception means receives movable body retrieval information addressed to the local apparatus.

17. The movable body management system according to claim 15, wherein
said mobile communication terminal used by a user who wants to use said movable body apparatus comprises:

current position detection means for detecting a current position of a local apparatus; and
transmission means for transmitting said current position detected by said current position detection means, wherein
said current position reception means in said movable body management apparatus is also capable of receiving said current position from said mobile communication terminal, and wherein

said positional information transmission means retrieves a movable body nearest to said mobile communication terminal based on said current position of said mobile communication terminal received by said current position reception means.

18. The movable body management system according to claim 15, wherein
said movable body apparatus comprises:

authentication information transmission means for transmitting authentication information to said movable body management apparatus;
authentication result information reception means for receiving authentication result information returned in response to said authentication information;
lock means for preventing the use of said movable body apparatus;
lock control means for controlling said lock means according to said authentication result information received by said authentication result information reception means, and wherein

said movable body management apparatus comprises:

authentication information reception means for receiving said authentication information from said movable body apparatus; and
authentication result information transmission means for transmitting authentication result information corresponding to said authentication information received by said authentication information reception means to said movable body apparatus.

19. The movable body management system according to claim 18, wherein

said movable body apparatus includes payable information acceptance means for accepting payable information;

said authentication information transmission means transmits said payable information accepted by said payable information acceptance means as said authentication information to said movable body management apparatus;

said lock control means controls said lock means to release the lock when receiving said permission information as said authentication result information from said movable body management apparatus via said authentication result information reception means;

said movable body management apparatus includes determination means for determining whether payment is possible based on said payable information as said authentication information received by said authentication information reception means from said movable body apparatus; and

said authentication result information transmission means, when said determination means determines payment is possible, transmits permission information as said authentication result information to said movable body apparatus.

20. The movable body management system according to claim 19, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication and said determination means determines payment is possible.

21. The movable body management system according to claim 18, wherein

said movable body management apparatus comprises:

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication.

22. A movable body apparatus in a movable body rental system comprising said movable body apparatus to be rented and a movable body management apparatus to manage said movable body apparatus, said movable body apparatus having:

authentication information transmission means for transmitting authentication information to said movable body management apparatus;
authentication result information reception means for receiving authentication result information returned in response to said authentication information;
lock means for preventing the use of said movable body apparatus;
lock control means for controlling said lock means according to said authentication result information received by said authentication result information reception means;
distance measuring means for measuring mileage;
distance information transmission means for transmitting information indicating mileage measured by said distance measuring means to said movable body management apparatus;
time measuring means for measuring the driving time; and
time information transmission means for transmitting information indicating the driving time measured by said time measuring means to said movable body management apparatus.

23. The movable body apparatus according to claim 22, comprising:

payable information acceptance means for accepting payable information, wherein said authentication information transmission means transmits said payable information accepted by said payable information acceptance means as said authentication information to said movable body management apparatus; and

said lock control means controls said lock means to release the lock when receiving said permission information as said authentication result information from said movable body management apparatus via said authentication result information reception means.

24. A movable body apparatus in a movable body rental system comprising said movable body apparatus to be rented and a movable body management apparatus to manage said movable body apparatus, said movable body apparatus having:

authentication information transmission means for transmitting authentication information to said movable body management apparatus; authentication result information reception means for receiving authentication result information returned in response to said authentication information; lock means for preventing the use of said movable body apparatus; lock control means for controlling said lock means according to said authentication result information received by said authentication result information reception means; current position detection means for detecting a current position at a specified time interval; and current position transmission means for transmitting information indicating a current position each time said current position detection means detects it.

25. The movable body apparatus according to claim 24, comprising:

payable information acceptance means for accepting payable information, wherein said authentication information transmission means transmits said payable information accepted by said payable information acceptance means as said authentication information to said movable body management apparatus; and

said lock control means controls said lock means to release the lock when receiving said permission information as said authentication result information from said movable body management apparatus via said authentication result information reception means.

26. A movable body management apparatus in a movable body rental system comprising a movable body apparatus to be rented and a movable body management apparatus to manage said movable body apparatus, said movable body management apparatus having:

authentication information reception means for receiving authentication information from said movable body apparatus; authentication result information transmission means for transmitting authentication result information corresponding to said authentication information received by said authentication information reception means to said movable body apparatus; distance information reception means for receiving information indicating said mileage from said movable body apparatus; time information reception means for receiving information indicating said driving time from said movable body apparatus; fee calculation means for calculating a fee for said movable body apparatus according to said mileage received by said distance information reception means and said driving time received by said time information reception means; and settlement means for performing settlement processing according to the use of said movable body apparatus based on a calculation result of said fee calculation means.

27. The movable body management apparatus according to claim 26, comprising:

determination means for determining whether payment is possible based on said payable information as said authentication information received by said authentication information reception means from said movable body apparatus, wherein

said authentication result information transmission means, when said determination means determines payment is possible, transmits permission information as said authentication result information to said movable body apparatus.

28. The movable body management apparatus according to claim 27, comprising:

authentication request reception means for receiving an authentication request including identification information about a user transmitted via a mobile communication terminal owned by said user of said movable body apparatus; and authentication processing means for performing authentication processing based on said identification information included in said authentication request received by said authentication request reception means, wherein

said authentication result information transmission means transmits said permission information when said authentication processing means grants authentication and said determination means determines payment is possible.

29. The movable body management apparatus according to claim 26, comprising:

authentication request reception means for receiving an authentication request including identification information about a user transmitted via a mobile communication terminal owned by said user of said movable body apparatus; and authentication processing means for performing authentication processing based on said identification information included in said authentication request received by said authentication request reception means, wherein

said authentication result information transmission means transmits said permission information when said authentication processing means grants authentication.

30. The movable body management apparatus according to claim 26, wherein said fee calculation means differentiates said fee according to a position where said movable body apparatus is returned.

31. The movable body management apparatus according to claim 30, wherein said fee calculation means sets a higher fee when said movable body apparatus is returned to a position different from a predetermined return position than when it is returned to said return position.

32. The movable body management apparatus according to claim 26, wherein said fee calculation means calculates said fee based on said driving time and an average driving time which is determined according to said mileage.

33. A movable body management apparatus in a movable body rental system comprising a movable body apparatus to be rented and a movable body management apparatus to manage said movable body apparatus, said movable body management apparatus having:

authentication information reception means for receiving authentication information from said movable body apparatus; authentication result information transmission means for transmitting an authentication result corresponding to said authentication information received by said authentication information reception means to said movable body apparatus; current position reception means for receiving said current positional information from said movable body apparatus; mileage measuring means for measuring mileage of said movable body apparatus by using said current positional information received by said current position reception means; driving time measuring means for measuring the driving time of said movable body apparatus according to said current positional information received by said current position reception means; fee calculation means for calculating a fee for said movable body apparatus according to said mileage measured by said mileage measuring means distance information reception means and said driving time measured by said driving time measuring means; and settlement means for performing settlement processing according to the use of said movable body apparatus based on a calculation result of said fee calculation means.

34. The movable body management apparatus according to claim 33, comprising:

determination means for determining whether payment is possible based on said payable information as said authentication information received by said authentication information reception means from said movable body apparatus, wherein

said authentication result information transmission means, when said determination means determines payment is possible, transmits permission information as said authentication result information to said movable body apparatus.

35. The movable body management apparatus according to claim 34, comprising:

authentication request reception means for receiving an authentication request including identification information about a user transmitted via a mobile communication terminal owned by said user of said movable body apparatus; and authentication processing means for performing authentication processing based on said identification information included in said authentication request received by said authentication request reception means, wherein

said authentication result information transmission means of said movable body management apparatus transmits said permission information when said authentication processing means grants authentication and said determination means determines payment is possible.

36. The movable body management apparatus according to claim 33, comprising:

authentication request reception means for receiving an authentication request including identification information about a user transmitted via a mobile communication terminal owned by said user of said movable body apparatus; and
authentication processing means for performing authentication processing based on said identification information included in said authentication request received by said authentication request reception means, and wherein

said authentication result information transmission means transmits said permission information when said authentication processing means grants authentication.

37. The movable body management apparatus according to claim 33, comprising: said fee calculation means differentiates said fee according to a position where said movable body apparatus is returned.

38. The movable body management apparatus according to claim 37, comprising: said fee calculation means sets a higher fee when said movable body apparatus is returned to a position different from a predetermined return position than when it is returned to said return position.

39. The movable body management apparatus according to claim 33, wherein said fee calculation means calculates said fee based on said driving time and an average driving time which is determined according to said mileage.

40. A movable body apparatus in a movable body management system comprising said movable body apparatus to be rented and a movable body management apparatus to manage said movable body apparatus, said movable body apparatus having:

retrieval information reception means for receiving movable body retrieval information from a user's mobile communication terminal; and

notification means for notifying said user of a local apparatus position when said retrieval information reception means receives movable body retrieval information addressed to the local apparatus.

41. The movable body apparatus according to claim 40, comprising:

authentication information transmission means for transmitting authentication information to said movable body management apparatus;
authentication result information reception means for receiving authentication result information returned in response to said authentication information;
lock means for preventing the use of said movable body apparatus;
permission information reception means for receiving permission information from said movable body management apparatus; and
lock control means for releasing a lock by controlling said lock means when said permission information reception means receives said permission information.

42. The movable body apparatus according to claim 40, comprising

payable information acceptance means for accepting payable information, wherein said authentication information transmission means transmits said payable information accepted by said payable information acceptance means as said authentication information to said movable body management apparatus; and

said lock control means controls said lock means to release the lock when receiving said permission information as said authentication result information from said movable body management apparatus via said authentication result information reception means.

43. A movable body management apparatus in a movable body management system comprising a movable body apparatus to be rented and a movable body management apparatus to manage said movable body apparatus, said movable body management apparatus having:

current position reception means for receiving a current position of said movable body apparatus transmitted from said movable body apparatus;
provision request reception means for receiving a provision request for positional information about a nearby movable body transmitted from a user's mobile communication terminal; and

positional information transmission means for transmitting information indicating a current position of a nearby movable body apparatus to said mobile communication terminal transmitting said provision request when said provision request reception means receives said provision request.

44. The movable body management apparatus according to claim 43, wherein said positional information transmission means transmits information indicating a current position of said movable body apparatus and movable body retrieval information for retrieving said movable body apparatus.

45. The movable body management apparatus according to claim 43, wherein

said current position reception means is also capable of receiving said current position from a mobile communication terminal used by a user who wants to use said movable body apparatus; and

said positional information transmission means retrieves a movable body nearest to said mobile communication terminal based on said current position of said mobile communication terminal received by said current position reception means.

46. The movable body management apparatus according to claim 43, comprising

authentication information reception means for receiving said authentication information from said movable body apparatus; and

authentication result information transmission means for transmitting authentication result information corresponding to said authentication information received by said authentication information reception means to said movable body apparatus.

47. The movable body management apparatus according to claim 46, comprising

determination means for determining whether payment is possible based on said payable information as said authentication information received by said authentication information reception means from said movable body apparatus, wherein

said authentication result information transmission means, when said determination means determines payment is possible, transmits permission information as said authentication result information to said movable body apparatus.

48. The movable body management apparatus according to claim 47, comprising

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication and said determination means determines payment is possible.

49. The movable body management apparatus according to claim 46, comprising

authentication request reception means for receiving an authentication request including identification information about a user transmitted via a mobile communication terminal owned by said user of said movable body apparatus; and

authentication processing means for performing authentication processing based on said identification information included in said authentication request received by said authentication request reception means, and wherein

said authentication result information transmission means of said movable body management apparatus transmits said permission information when said authentication processing means grants authentication.

50. A movable body rental method for a movable body rental system having a plurality of movable body apparatuses and a movable body management apparatus to manage said plurality of movable body apparatuses, wherein

each of said plurality of movable body apparatuses comprises the steps of:

transmitting authentication information to said movable body management apparatus;
receiving authentication result information returned in response to said authentication information;
controlling a lock to unlock a relevant movable body apparatus when authentication result information received at said step of receiving authentication result information indicates successful authentication;
measuring mileage;
transmitting information indicating mileage measured at said step of measuring mileage to said movable body management apparatus;
measuring a driving time; and
transmitting information indicating the driving time measured at said step of measuring a driving time to said movable body management apparatus, wherein

said movable body management apparatus comprises the steps of:

receiving said authentication information from said movable body apparatus;

transmitting authentication result information corresponding to said authentication information received at said step of receiving authentication information to said movable body apparatus;

receiving information indicating said mileage from said movable body apparatus;

receiving information indicating said driving time from said movable body apparatus;

calculating a fee of said movable body apparatus according to said mileage received at said step of receiving distance information and said driving time received at said step of receiving time information; and

performing settlement processing for a fee of said movable body apparatus based on a result of said step of calculating a fee.

**51.** The movable body rental method according to claim 50, wherein

said movable body apparatus has a step of accepting input of payable information;

said step of transmitting authentication information transmits said payable information accepted at said step of accepting payable information as said authentication information to said movable body management apparatus;

said step of controlling a lock releases it when said step of receiving authentication result information receives said permission information as said authentication result information from said movable body management apparatus;

said movable body management apparatus has a step of determining whether payment is possible based on said payable information as said authentication information received at said step of receiving authentication information from said movable body apparatus; and

said step of transmitting authentication result information transmits permission information as said authentication result information to said movable body apparatus when said determination step determines that payment is possible.

**52.** The movable body rental method according to claim 50, wherein

said movable body management apparatus comprises the steps of:

receiving an authentication request including identification information about a user transmitted via a mobile communication terminal owned by said user of said movable body apparatus;

and

performing authentication processing based on said identification information included in said authentication request received at said step of receiving an authentication request, wherein said step of transmitting authentication result information of said movable body management apparatus transmits said permission information when said step of performing authentication processing grants authentication and said determination step determines payment is possible.

**53.** The movable body rental method according to claim 50, wherein

said movable body management apparatus comprises the steps of:

receiving an authentication request including identification information about a user transmitted via a mobile communication terminal owned by said user of said movable body apparatus; and

performing authentication processing based on said identification information included in said authentication request received at said step of receiving an authentication request, wherein

said step of transmitting authentication result information of said movable body management apparatus transmits said permission information when said step of performing authentication processing grants authentication.

**54.** The movable body rental method according to claim 50, wherein said step of calculating a fee for said movable body management apparatus differentiates said fee according to a position where said movable body apparatus is returned.

**55.** The movable body rental method according to claim 54, wherein said step of calculating a fee for said movable body management apparatus sets a higher fee when said movable body apparatus is returned to a position different from a predetermined return position than when it is returned to said return position.

**56.** The movable body rental method according to claim 50, wherein said step of calculating a fee for said movable body management apparatus calculates said fee based on said driving time and an average driving time which is determined according to said mileage.

**57.** A movable body rental method for a movable body rental system having a plurality of movable body apparatuses and a movable body management apparatus to manage said plurality of movable body apparatuses, wherein

each of said plurality of movable body apparatuses comprises the steps of:

transmitting authentication information to said movable body management apparatus;
receiving authentication result information returned in response to said authentication information;
controlling a lock to unlock a relevant movable body apparatus when authentication result information received at said step of receiving authentication result information indicates successful authentication;
detecting a current position at a specified time interval; and
transmitting information indicating a current position each time said current position is detected at said step of detecting a current position, wherein

said movable body management apparatus comprises the steps of:

receiving said authentication information from said movable body apparatus;
transmitting an authentication result corresponding to said authentication information received at said step of receiving authentication information to said movable body apparatus;
receiving said current positional information from said movable body apparatus;
measuring mileage of said movable body apparatus by using said current positional information received at said step of receiving a current position;
measuring a driving time of said movable body apparatus according to said current positional information received at said step of receiving a current position;
calculating a fee of said movable body apparatus according to said mileage received at said step of measuring mileage and said driving time received at said step of measuring a driving time; and
performing settlement processing for a fee of said movable body apparatus based on a result of said step of calculating a fee.

58. The movable body rental method according to claim 57, wherein
said movable body apparatus has a step of accepting input of payable information;
said step of transmitting authentication information transmits payable information accepted at said step of accepting payable information as said authentication information to said movable body management apparatus;
said step of controlling a lock releases it when said step of receiving authentication result information receives said permission information as said authentication result information from said movable body management apparatus;
said movable body management apparatus has a step of determining whether payment is possible based on said payable information as said authentication information received at said step of receiving authentication information from said movable body apparatus; and
said step of transmitting authentication result information transmits permission information as said authentication result information to said movable body apparatus when said determination step determines that payment is possible.

59. The movable body rental method according to claim 58, wherein
said movable body management apparatus comprises the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information of said movable body management apparatus transmits said permission information when said step of performing authentication processing grants authentication and said determination step determines payment is possible.

60. The movable body rental method according to claim 57, wherein
said movable body management apparatus comprises the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information of said movable body management apparatus transmits said permission information when said step of performing authentication processing grants authentication.

61. The movable body rental method according to claim 57, wherein said step of calculating a fee for said movable body management apparatus differentiates said fee according to a position where said movable body apparatus is returned.

62. The movable body rental method according to claim 61, wherein said step of calculating a fee for said movable body management apparatus sets a higher fee when said movable body apparatus is returned to a position different from a predetermined return position than when it is returned to said return position.

63. The movable body rental method according to claim 57, wherein said step of calculating a fee for said movable body management apparatus calculates said fee based on said driving time and an average driving time which is determined according to said mileage.

64. A movable body management method of managing a plurality of movable body apparatuses by a movable body management apparatus, wherein said movable body apparatus comprises the steps of:

measuring a current position; and
transmitting information indicating said current position measured at said step of measuring a current position, and wherein

said management apparatus comprises the steps of:

receiving information which is transmitted from said movable body apparatus and indicates a current position of said movable body apparatus;
receiving a provision request for positional information about a nearby movable body transmitted from a user's mobile communication terminal; and
transmitting information indicating a current position of a nearby movable body apparatus to said mobile communication terminal transmitting said provision request when said step of receiving a provision request receives said provision request.

65. The movable body management method according to claim 64, wherein said step of transmitting positional information transmits information indicating a current position of said movable body apparatus and movable body retrieval information for retrieving said movable body apparatus; and
a user who wants to use said movable body apparatus can transmit movable body retrieval information for retrieving said movable body apparatus to said movable body apparatus via a mobile communication terminal owned by said user, and wherein
said movable body apparatus comprises the steps of:

receiving said movable body retrieval information; and
notifying said user of a local apparatus position when said step of receiving retrieval information receives movable body retrieval information addressed to the local apparatus.

66. The movable body management method according to claim 64, wherein said mobile communication terminal used by a user who wants to use said movable body apparatus comprises:

a step of detecting a current position of a local apparatus; and
a transmission result for transmitting said current position detected at said step detecting a current position, wherein
said step of receiving a current position in said movable body management apparatus is also capable of receiving said current position from said mobile communication terminal, and wherein
said step of transmitting positional information retrieves a movable body nearest to said mobile communication terminal based on said current position of said mobile communication terminal received at said step of receiving a current position.

67. The movable body management method according to claim 64, wherein said movable body apparatus comprises the steps of:

transmitting authentication information to said movable body management apparatus;
receiving authentication result information returned in response to said authentication information; and
controlling a lock to unlock a relevant movable body apparatus when authentication result information received at said step of receiving authentication result information indicates successful authentication, and wherein

said movable body management apparatus comprises the steps of:

receiving said authentication information from said movable body apparatus; and
transmitting authentication result information corresponding to said authentication information received at said step of receiving authentication information to said movable body apparatus.

68. The movable body management method according to claim 64, wherein

said movable body apparatus has a step of accepting input of payable information;
said step of transmitting authentication information transmits said payable information accepted at said step of accepting payable information as said authentication information to said movable body management apparatus;
said step of controlling a lock releases it when said step of receiving authentication result information receives said permission information as said authentication result information from said movable body management apparatus;
said movable body management apparatus has a step of determining whether payment is possible based on said payable information as said authentication information received at said step of receiving authentication information from said movable body apparatus; and
said step of transmitting authentication result information transmits permission information as said authentication result information to said movable body apparatus when said determination step determines that payment is possible.

69. The movable body management method according to claim 68, wherein

said movable body management apparatus comprises the steps of:

receiving an authentication request including identification information about a user transmitted via a mobile communication terminal owned by said user of said movable body apparatus; and
performing authentication processing based on said identification information included in said authentication request received at said step of receiving an authentication request, wherein said step of transmitting authentication result information of said movable body management apparatus transmits said permission information when said step of performing authentication processing grants authentication and said determination step determines payment is possible.

70. The movable body management method according to claim 67, comprising the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information of said movable body management apparatus transmits said permission information when said step of performing authentication processing grants authentication.

71. A method of managing a movable body apparatus in a movable body rental system comprising a movable body apparatus to be rented and a movable body management apparatus to manage said movable body apparatus, said method comprising the steps of:

transmitting authentication information to said movable body management apparatus;
receiving authentication result information returned in response to said authentication information;
controlling a lock means for preventing the use of said movable body apparatus according to said authentication result information received at said step of receiving authentication result information;
measuring mileage;
transmitting information indicating mileage measured at said step of measuring mileage to said movable body management apparatus;
measuring a driving time; and
transmitting information indicating the driving time measured at said step of measuring a driving time to said movable body management apparatus.

72. The movable body apparatus management method according to claim 71, comprising the step of:

accepting input of payable information, wherein
said step of transmitting authentication information transmits said payable information accepted at said step of accepting payable information as said authentication information to said movable body management apparatus, and wherein said step of controlling a lock controls said lock means to release a lock when said step of receiving authentication result information receives said permission information as said authentication result information from said movable body management apparatus.

73. A method of managing a movable body apparatus in a movable body rental system comprising a movable body apparatus to be rented and a movable body management apparatus to manage said movable body apparatus, said method comprising the steps of:

transmitting authentication information to said movable body management apparatus;
receiving authentication result information returned in response to said authentication information; and
controlling a lock means for preventing the use of said movable body apparatus according to said authentication result information received at said step of receiving authentication result information;
detecting a current position at a specified time interval; and
transmitting information indicating a current position each time said current position is detected at said step of detecting a current position.

74. The movable body apparatus management method according to claim 73, comprising the step of:

accepting input of payable information, wherein said step of transmitting authentication information transmits said payable information accepted at said step of accepting payable information as said authentication information to said movable body management apparatus, and wherein said step of controlling a lock controls said lock means to release a lock when said step of receiving authentication result information receives said permission information as said authentication result information from said movable body management apparatus.

75. A movable body management method for a movable body management apparatus in a movable body rental system comprising a movable body apparatus to be rented and said movable body management apparatus to manage said movable body apparatus, said method comprising the steps of:

receiving authentication information from said movable body apparatus;
transmitting authentication result information corresponding to said authentication information received at said step of receiving authentication information to said movable body apparatus;
receiving information indicating said mileage from said movable body apparatus;
receiving information indicating said driving time from said movable body apparatus;
calculating a fee of said movable body apparatus according to said mileage received at said step of receiving distance information and said driving time received at said step of receiving time information; and
performing settlement processing for a fee of said movable body apparatus based on a result of said step of calculating a fee.

76. The movable body management method according to claim 75, comprising the step of:

determining whether payment is possible based on payable information as said authentication information received at said step of receiving authentication information from said movable body apparatus, wherein

said step of transmitting authentication result information transmits permission information as said authentication result information to said movable body apparatus when said determination step determines that payment is possible.

77. The movable body management method according to claim 76, comprising the steps of:

receiving an authentication request including identification information about a user transmitted via a mobile communication terminal owned by said user of said movable body apparatus; and
performing authentication processing based on said identification information included in said authentication request received at said step of receiving an authentication request, wherein said step of transmitting authentication result information transmits said permission information when said step of performing authentication processing grants authentication and said determination step determines payment is possible.

78. The movable body management method according to claim 75, comprising the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information transmits said permission information when said step of performing authentication processing grants authentication.

79. The movable body management method according to claim 75, wherein said step of calculating a fee differentiates said fee according to a position where said movable body apparatus is returned.

80. The movable body management method according to claim 79, wherein said step of calculating a fee sets a higher fee when said movable body apparatus is returned to a position different from a predetermined return position than when it is returned to said return position.

81. The movable body management method according to claim 75, wherein said step of calculating a fee calculates said fee based on said driving time and an average driving time which is determined according to said mileage.

82. A movable body management method for a movable body management apparatus in a movable body rental system comprising a movable body apparatus to be rented and said movable body management apparatus to manage said movable body apparatus, said method comprising the steps of:

receiving authentication information from said movable body apparatus;
transmitting an authentication result corresponding to said authentication information received at said step of receiving authentication information to said movable body apparatus;
receiving said current positional information from said movable body apparatus;
measuring mileage of said movable body apparatus by using said current positional information received at said step of receiving a current position;
measuring a driving time of said movable body apparatus according to said current positional information received at said step of receiving a current position;
calculating a fee of said movable body apparatus according to said mileage received at said step of measuring mileage and said driving time received at said step of measuring a driving time; and
performing settlement processing for a fee of said movable body apparatus based on a result of said step of calculating a fee.

83. The movable body management method according to claim 82, comprising the step of:

determining whether payment is possible based on payable information as said authentication information received at said step of receiving authentication information from said movable body apparatus, wherein
said step of transmitting authentication result information transmits permission information as said authentication result information to said movable body apparatus when said determination step determines that payment is possible.

84. The movable body management method according to claim 83, comprising the steps of:

receiving an authentication request including identification information about a user transmitted via a a mobile communication terminal owned by said user of said movable body apparatus; and
performing authentication processing based on said identification information included in said authentication request received at said step of receiving an authentication request, wherein

said step of transmitting authentication result information of said movable body management apparatus transmits said permission information when said step of performing authentication processing grants authentication and said determination step determines payment is possible.

85. The movable body management method according to claim 82, comprising the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information transmits said permission information when said step of performing authentication processing grants authentication.

86. The movable body management method according to claim 82, wherein said step of calculating a fee differentiates said fee according to a position where said movable body apparatus is returned.

87. The movable body management method according to claim 86, wherein said step of calculating a fee sets a higher fee when said movable body apparatus is returned to a position different from a predetermined return position than when it is returned to said return position.

88. The movable body management method according to claim 82, wherein said step of calculating a fee calculates said fee based on said driving time and an average driving time which is determined according to said mileage.

89. A method of managing said movable body apparatus in a movable body management system comprising a movable body apparatus to be rented and a movable body management apparatus to manage said movable body apparatus, said movable body management apparatus having:

receiving movable body retrieval information from a user's mobile communication terminal; notifying said user of a local apparatus position when said step of receiving retrieval information receives movable body retrieval information addressed to the local apparatus.

90. The movable body apparatus management method according to claim 89, comprising the step of:

transmitting authentication information to said movable body management apparatus; receiving authentication result information returned in response to said authentication information; receiving permission information from said movable body management apparatus; and controlling lock means to release a lock for preventing the use of said movable body apparatus when said step of receiving permission information receives said permission information.

91. The movable body apparatus management method according to claim 91, comprising the step of:

accepting input of payable information, wherein said step of transmitting authentication information transmits said payable information accepted at said step of accepting payable information as said authentication information to said movable body management apparatus, and wherein said step of controlling a lock controls said lock means to release a lock when said step of receiving authentication result information receives said permission information as said authentication result information from said movable body management apparatus.

92. A movable body management method for a movable body management apparatus in a movable body management system comprising a movable body apparatus to be rented and said movable body management apparatus to manage said movable body apparatus, said method comprising the steps of:

receiving a current position of said movable body apparatus transmitted from said movable body apparatus; receiving a provision request for positional information about a nearby movable body transmitted from a user's mobile communication terminal; and transmitting information indicating a current position of a nearby movable body apparatus to said mobile communication terminal transmitting said provision request when said step of receiving a provision request receives said provision request.

93. The movable body management method according to claim 92, wherein said step of transmitting positional information transmits information indicating a current position of said movable body apparatus and movable body retrieval information for retrieving said movable body apparatus.

94. The movable body management method according to claim 92, wherein
said step of receiving a current position is also capable of receiving said current position from a mobile communication terminal used by a user who wants to use said movable body apparatus; and
said step of transmitting positional information retrieves a movable body nearest to said mobile communication terminal based on said current position of said mobile communication terminal received at said step of receiving a current position.

95. The movable body management method according to claim 92, comprising the steps of:

receiving said authentication information from said movable body apparatus; and transmitting authentication result information corresponding to said authentication information received at said step of receiving authentication information to said movable body apparatus.

96. The movable body management method according to claim 95, comprising the step of:

determining whether payment is possible based on said payable information as said authentication information received at said step of receiving authentication information from said movable body apparatus, wherein said step of transmitting authentication result information transmits permission information as said authentication result information to said movable body apparatus when said determination step determines that payment is possible.

97. The movable body management method according to claim 96, comprising the steps of:

receiving an authentication request including identification information about a user transmitted via a mobile communication terminal owned by said user of said movable body apparatus; and

performing authentication processing based on said identification information included in said authentication request received at said step of receiving an authentication request, wherein said step of transmitting authentication result information of said movable body management apparatus transmits said permission information when said step of performing authentication processing grants authentication and said determination step determines payment is possible.

98. The movable body management method according to claim 95, comprising the steps of:

receiving an authentication request including identification information about a user transmitted via a mobile communication terminal owned by said user of said movable body apparatus; and

performing authentication processing based on said identification information included in said authentication request received at said step of receiving an authentication request, wherein

said step of transmitting authentication result information of said movable body management apparatus transmits said permission information when said step of performing authentication processing grants authentication.

99. A computer-readable recording medium to record a program executed on a computer for a movable body apparatus in a movable body rental system comprising a movable body apparatus to be rented and a movable body management apparatus to manage said movable body apparatus, said recording medium configured to record a program for executing the steps of:

transmitting authentication information to said movable body management apparatus;
receiving authentication result information returned in response to said authentication information;
controlling a lock means for preventing the use of said movable body apparatus according to said authentication result information received at said step of receiving authentication result information;
measuring mileage;
transmitting information indicating mileage measured at said step of measuring mileage to said movable body management apparatus;
measuring a driving time; and
transmitting information indicating the driving time measured at said step of measuring a driving time to said movable body management apparatus.

100. The computer-readable recording medium according to claim 99, said recording medium configured to record a program for executing the step of:

accepting input of payable information, wherein

said step of transmitting authentication information transmits said payable information accepted at said step of accepting payable information as said authentication information to said movable body management apparatus; and
said step of controlling a lock controls said lock means to release a lock when said step of receiving authentication result information receives said permission information as said authentication result information from said movable body management apparatus.

101. A computer-readable recording medium to record a program executed on a computer for a movable body apparatus in a movable body rental system comprising a movable body apparatus to be rented and a movable body management apparatus to manage said movable body apparatus, said recording medium configured to record a program for executing the steps of:

transmitting authentication information to said movable body management apparatus;
receiving authentication result information returned in response to said authentication information;
controlling a lock means for preventing the use of said movable body apparatus according to said authentication result information received at said step of receiving authentication result information;
detecting a current position at a specified time interval; and
transmitting information indicating a current position each time said current position detection means detects it.

102. The computer-readable recording medium according to claim 101, said recording medium configured to record a program for executing the step of:

accepting input of payable information, wherein

said step of transmitting authentication information transmits said payable information accepted at said step of accepting payable information as said authentication information to said movable body management apparatus; and
said step of controlling a lock controls said lock means to release a lock when said step of receiving authentication result information receives said permission information as said authentication result information from said movable body management apparatus.

**103.** A computer-readable recording medium to record a program executed on a computer for a movable body management apparatus in a movable body rental system comprising a movable body apparatus to be rented and said movable body. management apparatus to manage said movable body apparatus, said recording medium configured to record a program for executing the steps of:

receiving authentication information from said movable body apparatus;
transmitting authentication result information corresponding to said authentication information received at said step of receiving authentication information to said movable body apparatus;
receiving information indicating said mileage from said movable body apparatus;
receiving information indicating said driving time from said movable body apparatus;
calculating a fee of said movable body apparatus according to said mileage received by said distance information reception means and said driving time received by said time information reception means; and
performing settlement processing for a fee of said movable body apparatus based on a result of said step of calculating a fee.

**104.** The computer-readable recording medium according to claim 103, said recording medium configured to record a program for executing the step of:

determining whether payment is possible based on payable information as said authentication information received at said step of receiving authentication information from said movable body apparatus, wherein

said step of transmitting authentication result information transmits permission information as said authentication result information to said movable body apparatus when said determination step determines that payment is possible.

**105.** The computer-readable recording medium according to claim 104, said recording medium configured to record a program for executing the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information transmits said permission information when said step of performing authentication processing grants authentication and said determination step determines payment is possible.

**106.** The computer-readable recording medium according to claim 103, said recording medium configured to record a program for executing the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information transmits said permission information when said step of performing authentication processing grants authentication.

**107.** The computer-readable recording medium according to claim 103, said recording medium configured to record a program in which said step of calculating a fee differentiates said fee according to a position where said movable body apparatus is returned.

**108.** The computer-readable recording medium according to claim 107, said recording medium configured to record a program in which said step of calculating a fee sets a higher fee when said movable body apparatus is returned to a position different from a predetermined return position than when it is returned to said return position.

**109.** The computer-readable recording medium according to claim 103, said recording medium configured to record a program in which said step of calculating a fee calculates said fee based on said driving time and an average driving time which is determined according to said mileage.

110. A computer-readable recording medium to record a program executed on a computer for a movable body management apparatus in a movable body rental system comprising a movable body apparatus to be rented and said movable body management apparatus to manage said movable body apparatus, said recording medium configured to record a program for executing the steps of:

receiving authentication information from said movable body apparatus;

transmitting an authentication result corresponding to said authentication information received at said step of receiving authentication information to said movable body apparatus;

receiving said current positional information from said movable body apparatus;

measuring mileage of said movable body apparatus by using said current positional information received at said step of receiving a current position;

measuring a driving time of said movable body apparatus according to said current positional information received at said step of receiving a current position;

calculating a fee of said movable body apparatus according to said mileage received at said step of measuring mileage and said driving time received at said step of measuring a driving time; and

performing settlement processing for a fee of said movable body apparatus based on a result of said step of calculating a fee.

111. The computer-readable recording medium according to claim 110, said recording medium configured to record a program for executing the step of:

determining whether payment is possible based on payable information as said authentication information received at said step of receiving authentication information from said movable body apparatus, wherein

said step of transmitting authentication result information transmits permission information as said authentication result information to said movable body apparatus when said determination step determines that payment is possible.

112. The computer-readable recording medium according to claim 111, recording a program for executing the steps of:

receiving an authentication request including identification information about a user transmitted via a mobile communication terminal owned by said user of said movable body apparatus; and

performing authentication processing based on said identification information included in said authentication request received at said step of receiving an authentication request, wherein said step of transmitting authentication result information of said movablebody management apparatus transmits said permission information when said step of performing authentication processing grants authentication and said determination step determines payment is possible.

113. The computer-readable recording medium according to claim 110, recording a program for executing the steps of:

receiving an authentication request including identification information about a user transmitted via a mobile communication terminal owned by said user of said movable body apparatus; and

performing authentication processing based on said identification information included in said authentication request received at said step of receiving an authentication request, wherein

said step of transmitting authentication result information transmits said permission information when said step of performing authentication processing grants authentication.

114. The computer-readable recording medium according to claim 110, said recording medium configured to record a program in which said step of calculating a fee differentiates said fee according to a position where said movable body apparatus is returned.

115. The computer-readable recording medium according to claim 114, said recording medium configured to record a program in which said step of calculating a fee sets a higher fee when said movable body apparatus is returned to a position different from a predetermined return position than when it is returned to said return position.

116. The computer-readable recording medium according to claim 110, said recording medium configured to record a program in which said step of calculating a fee calculates said fee based on said driving time and an average driving time which is determined according to said mileage.

**117.** A computer-readable recording medium to record a program executed on a computer for a movable body apparatus in a movable body management system comprising a movable body apparatus to be rented and a movable body management apparatus to manage said movable body apparatus, said recording medium configured to record a program for executing the steps of:

> receiving movable body retrieval information from a user's mobile communication terminal; and
> notifying said user of a local apparatus position when said step of receiving retrieval information receives movable body retrieval information addressed to the local apparatus.

**118.** The computer-readable recording medium according to claim 117, said recording medium configured to record a program for executing the steps of:

> transmitting authentication information to said movable body management apparatus;
> receiving authentication result information returned in response to said authentication information;
> receiving permission information from said movable body management apparatus; and
> controlling lock means to release a lock for preventing the use of said movable body apparatus when said step of receiving permission information receives said permission information.

**119.** The computer-readable recording medium according to claim 118, said recording medium configured to record a program for executing the step of:

> accepting input of payable information, wherein
>
> said step of transmitting authentication information transmits said payable information accepted at said step of accepting payable information as said authentication information to said movable body management apparatus; and
> said step of controlling a lock controls said lock means to release a lock when said step of receiving authentication result information receives said permission information as said authentication result information from said movable body management apparatus.

**120.** A computer-readable recording medium to record a program executed on a computer for a movable body management apparatus in a movable body management system comprising a movable body apparatus to be rented and said movable body management apparatus to manage said movable body apparatus, said recording medium configured to record a program for executing the steps of:

> receiving a current position of said movable body apparatus transmitted from said movable body apparatus;
> receiving a provision request for positional information about a nearby movable body transmitted from a user's mobile communication terminal; and
> transmitting information indicating a current position of a nearby movable body apparatus to said mobile communication terminal transmitting said provision request when said step of receiving a provision request receives said provision request.

**121.** The computer-readable recording medium according to claim 120, said recording medium configured to record a program in which said step of transmitting positional information transmits information indicating a current position of said movable body apparatus and movable body retrieval information for retrieving said movable body apparatus.

**122.** The computer-readable recording medium according to claim 120, said recording medium configured to record a program in which
said step of receiving a current position is also capable of receiving said current position from a mobile communication terminal used by a user who wants to use said movable body apparatus; and
said step of transmitting positional information retrieves a movable body nearest to said mobile communication terminal based on said current position of said mobile communication terminal received at said step of receiving a current position.

**123.** The computer-readable recording medium according to claim 120, said recording medium configured to record a program for executing the steps of:

> receiving said authentication information from said movable body apparatus; and
> transmitting authentication result information corresponding to said authentication information received at said step of receiving authentication information to said movable body apparatus.

**124.** The computer-readable recording medium according to claim 123, said recording medium configured to record a program for executing the step of:

> determining whether payment is possible based on payable information as said authentication information received at said step of receiving authentication information from said movable body apparatus, wherein
said step of transmitting authentication result information transmits permission information as said authentication result information to said movable body apparatus when said determination step determines that payment is possible.

125. The computer-readable recording medium according to claim 120, recording a program for executing the steps of:

receiving an authentication request including identification information about a user transmitted via a mobile communication terminal owned by said user of said movable body apparatus; and
performing authentication processing based on said identification information included in said authentication request received at said step of receiving an authentication request, wherein
said step of transmitting authentication result information of said movable body management apparatus transmits said permission information when said step of performing authentication processing grants authentication and said determination step determines payment is possible.

126. The computer-readable recording medium according to claim 120, recording a program for executing the steps of:

receiving an authentication request including identification information about a user transmitted via a mobile communication terminal owned by said user of said movable body apparatus; and
performing authentication processing based on said identification information included in said authentication request received at said step of receiving an authentication request, wherein

said step of transmitting authentication result information of said movable body management apparatus transmits said permission information when said step of performing authentication processing grants authentication.

**FIG.1**

EP 1 304 636 A1

EP 1 304 636 A1

**FIG.2**

**FIG.3**

FIG.4

OPERATING COMPANY

S301 RECEIVE AND MANAGE POSITIONAL INFORMATION

S302 RECEIVE BICYCLE RETRIEVAL REQUEST

S303 RETRIEVE AND TRANSMIT POSITIONAL INFORMATION

S304 RECEIVE PERMISSION NUMBER AND CONDUCT AUTHENTICATION

S305 INQUIRY AND PERMISSION

BICYCLE

S201 DETECT CURRENT POSITION AT SPECIFIED TIME AND TRANSMIT IT

S202 NOTIFY POSITION CORRESPONDING TO THE RECEIVED BICYCLE RETRIEVAL NUMBER OF ITS OWN

A

USER (MEMBER)

S101 REGISTER AS A MEMBER AND OBTAIN A PERMISSION NUMBER

S102 PURCHASE VIRTUAL CURRENCY

S103 TRANSMIT A REQUEST TO RETRIEVE A BICYCLE

S104 RECEIVE (OBTAIN) POSITIONAL INFORMATION

S105 TRANSMIT BICYCLE RETRIEVAL NUMBER

S106 TRANSMIT PERMISSION NUMBER

S107 LOAD VIRTUAL CURRENCY AND TRANSMIT CURRENCY INFORMATION

USER
(MEMBER)

BICYCLE

OPERATING
COMPANY

A

*S203*

UNLOCK THE BICYCLE

*S204*

MANAGE TIME
AND MILEAGE

*S205*

NO ← END OF USAGE ?

↓ YES  *S206*

LOCK THE BICYCLE

*S207*

TRANSMIT POSITION
AND TIME INFORMATION

→

*S306*

RECEIVE POSITION
AND TIME INFORMATION

↓

B

## FIG.5

B

*S307*

CALCULATE FEE

*S308*

NO   VALID
BALANCE?

*S108*

*S309*

YES

RECEIVE REMINDER ← TRANSMIT
REMINDER

*S109*

*S310*

TRANSMIT PAYMENT
INTENTION → RECEIVE
PAYMENT
INTENTION

*S208*

*S311*

RECEIVE INFORMATION
FOR UPDATING BALANCE ← TRANSMIT INFORMATION
FOR UPDATING BALANCE

*S209*

UPDATE BALANCE

*S110*

*S210*

RECEIVE VIRTUAL
CURRENCY ← RETURN VIRTUAL
CURRENCY

*S111*

END

# FIG.6

EP 1 304 636 A1

50

START

MEASURE TRAVELING DISTANCE
(RECEIVE) — S401

MEASURE TRAVELING TIME
(RECEIVE) — S402

MEASURE RETURN LOCATION
(RECEIVE) — S403

DETERMINE TIME AND
DISTANCE COEFFICIENTS — S404

CALCULATE FEE FOR TRAVELING — S405

S406

VALID BALANCE ? — NO — S407

YES — REMINDER

UPDATE VIRTUAL CURRENCY DATA
OF THE MOVABLE BODY APPARATUS — S408

END

# FIG.7

FIG.8

EP 1 304 636 A1

FIG.9

EP 1 304 636 A1

USER
(MEMBER)

CAR

OPERATING
COMPANY

*S501*

REGISTER AS A MEMBER AND
OBTAIN A PERMISSION NUMBER

*S601*

DETECT CURRENT
POSITION AT SPECIFIED
TIME AND TRANSMIT IT

*S701*

RECEIVE AND MANAGE
POSITIONAL INFORMATION

*S502*

PURCHASE VIRTUAL
CURRENCY

*S503*

TRANSMIT A REQUEST
TO RETRIEVE A CAR

*S702*

RECEIVE CAR
RETRIEVAL REQUEST

*S504*

RECEIVE (OBTAIN)
POSITIONAL INFORMATION

*S703*

RETRIEVE AND TRANSMIT
POSITIONAL INFORMATION

*S505*

TRANSMIT CAR
RETRIEVAL NUMBER

*S602*

NOTIFY POSITION CORRESPONDING
TO THE RECEIVED CAR
RETRIEVAL NUMBER OF ITS OWN

*S506*

TRANSMIT PERMISSION
NUMBER

*S704*

RECEIVE PERMISSION NUMBER
AND CONDUCT AUTHENTICATION

*S507*

INSERT VIRTUAL CURRENCY
AUTHENTICATION KEY

*S705*

INQUIRY AND
PERMISSION

A

# FIG.10

# FIG.11

USER
(MEMBER)

CAR

OPERATING
COMPANY

A →

S603
START THE ENGINE

S604
MANAGE TIME
AND MILEAGE

S605
END OF USAGE ?
NO
YES

S606
LOCK THE ENGINE

S607
TRANSMIT POSITION
AND TIME INFORMATION

S706
RECEIVE POSITION
AND TIME INFORMATION
→ B

55

FIG.13

EP 1 304 636 A1

**EP 1 304 636 A1**

**INTERNATIONAL SEARCH REPORT**

| International application No. |
| --- |
| PCT/JP01/06511 |

| A. CLASSIFICATION OF SUBJECT MATTER |
| --- |
| Int.Cl$^7$ G06F17/60, G07B15/00 |

According to International Patent Classification (IPC) or to both national classification and IPC

| B. FIELDS SEARCHED |
| --- |
| Minimum documentation searched (classification system followed by classification symbols)<br> Int.Cl$^7$ G06F17/60, G07B15/00 |

Documentation searched other than minimum documentation to the extent that such documents are included in the fields searched
Jitsuyo Shinan Koho          1922-1996     Toroku Jitsuyo Shinan Koho  1994-2001
Kokai Jitsuyo Shinan Koho  1971-2001     Jitsuyo Shinan Toroku Koho  1996-2001

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 06-68095 A (Israel Hirshberg),<br>11 March, 1994 (11.03.94),<br>(Family: none) | 1-39,41,43-51,<br>53-67,70-88,<br>90,92-116,<br>118-124 |
| A | Same information as indicated above | 40,89,117 |
| Y | JP 55-116200 A (Omron Tateishi Electronics Co.),<br>06 September, 1980 (06.09.80),<br>(Family: none) | 1-14,18-39,<br>41,46-51,<br>53-63,67,<br>70-88,90,<br>95-116,<br>118-119,<br>123-124 |
| Y | GB 2178211 A (City Wheels Ltd.),<br>04 February, 1987 (04.02.87),<br>& EP 212842 A1      & JP 62-63394 A | 1-14,18-39,41,<br>46-51,53-63,<br>67,70-88,90,<br>95-116,<br>118-119,<br>123-124 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention. |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br> 16 October, 2001 (16.10.01) | Date of mailing of the international search report<br> 30 October, 2001 (30.10.01) |
| --- | --- |
| Name and mailing address of the ISA/<br> Japanese Patent Office | Authorized officer |
| Facsimile No. | Telephone No. |

Form PCT/ISA/210 (second sheet) (July 1992)

**INTERNATIONAL SEARCH REPORT**

| International application No. |
| --- |
| PCT/JP01/06511 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 05-159143 A (Omron Corporation), 25 June, 1993 (25.06.93), (Family: none) | 1-14,18-39,41, 46-51,53-63, 67,70-88,90, 95-116, 118-119, 123-124 |
| Y | EP 698864 A2 (Daimler-Benz AG), 28 February, 1996 (28.02.96), & DE 4429852 A1   & JP 8-101993 A & EP 698864 A3   & US 5726885 A & EP 698864 B1   & DE 59506936 G | 1-39,41,43-51, 53-67,70-88, 90,92-116, 118-124 |
| Y | JP 08-47042 A (Fuji Software K.K., Sony Corporation), 16 February, 1996 (16.02.96)   (Family: none) | 8-21,24-25, 33-39,43-49, 57-67,70, 73-74,82-88, 92-98,101-102, 110-116, 120-124 |
| Y | WO 97/26634 A (Schlager; Baringer), 24 July, 1997 (24.07.97), & WO 96/13819 A1   & AU 9540115 A & US 5650770 A   & AU 9676953 A & BR 9509528 A   & EP 850467 A2 & EP 857341 A1   & KR 97707521 A & AU 697063 B    & JP 2000-505216 A & US 6198390 B1   & IL 124206 A | 8-21,24-25, 33-41,43-49, 57-67,70, 73-74,82-90, 92-98,101-102, 110-124 |
| Y | JP 10-55496 A (Hitachi, Ltd.), 24 February, 1998 (24.02.98), (Family: none) | 1-25,28-29, 33-41,43-51, 53-67,70-74, 77-78,82-90, 92-102, 105-106, 110-124 |
| Y | JP 11-338935 A (Nissan Motor Co., Ltd.), 10 December, 1999 (10.12.99), (Family: none) | 1-14,18-25, 28-29,35-36, 41,48-51, 53-63,67, 70-74,77-78, 84-85,90, 95-102, 105-106, 112-113, 118-119 |
| Y | JP 2000-52932 A (Alpine Electronics, Inc.), 22 February, 2000 (22.02.00), (Family: none) | 1-14,16,18-25, 28-29,35-36, 40-41,48-51, 53-63,65,67, 70-74,77-78, 84-85,89-90, 95-102, 105-106, 112-113, 117-119 |

Form PCT/ISA/210 (continuation of second sheet) (July 1992)

## INTERNATIONAL SEARCH REPORT

| International application No. |
| --- |
| PCT/JP01/06511 |

---

**Box I   Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 42,52,68,69,91,125,126

   because they relate to parts of the international application that do not comply with the prescribed requirements to such an extent that no meaningful international search can be carried out, specifically:

   (See extra sheet.)

3. ☐ Claims Nos.:
   because they are dependent claims and are not drafted in accordance with the second and third sentences of Rule 6.4(a).

---

**Box II   Observations where unity of invention is lacking (Continuation of item 2 of first sheet)**

This International Searching Authority found multiple inventions in this international application, as follows:

   (See extra sheet.)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☒    No protest accompanied the payment of additional search fees.

Form PCT/ISA/210 (continuation of first sheet (1)) (July 1992)

**INTERNATIONAL SEARCH REPORT**

International application No.

PCT/JP01/06511

Continuation of Box No. I-2 of continuation of first sheet (1)

Claim 42: Though there are the descriptions of "information transmission means", "the authentication information", "the lock means", and "the lock control means", any preceding description for these elements is not given in Claim 42 and the quoted Claim 40 and, therefore, the content of the description is very unclear.

Claim 52: Though there is the description of "the discrimination process", any preceding description is not given in Claim 52 and the quoted Claim 50 and, therefore, the content of the description is very unclear.

Claim 68: Though there are the descriptions of "the authentication information transmission process", "the authentication information", "the payment information", "the lock control process", "the authentication result information", "the utilization permission information", "the authentication result receiving process", and "the authentication information receiving process", any preceding description for these elements is not given in Claim 68 and the quoted Claim 64 and, therefore, the content of the description is very unclear.

Claim 69: Claim 68 is not clear and, therefore, the content of the description in Claim 69 quoting Claim 68 is very unclear.

Claim 91: Claim 92 itself is quoted and, therefore, the content of the description is very unclear.

Claim 125: Though there are the descriptions of "the discrimination process" and "the utilization permission information, any preceding description is not given in Claim 125 and the quoted Claim 120 and, therefore, the content of the description is very unclear.

Claim 126: Though there are the descriptions of "the authentication result information transmission process" and "the utilization permission information", any preceding description is not given in Claim 126 and the quoted Claim 120 and, therefore, the content of the description is very unclear.

Form PCT/ISA/210 (extra sheet) (July 1992)

**INTERNATIONAL SEARCH REPORT**

International application No.

PCT/JP01/06511

Continuation of Box No. II of continuation of first sheet (1)

Claims 1-7, 22-23, 26-32, 50-56, 71-72, 75-81, 99-100, and 103-109 (called the group A) are so linked that, in a movable body rental system, a movable body transmits authentication information and a movable body control device transmits the authenticated results according to the authentication information, the movable body controls a lock means according to the authenticated results, the movable body measures a travel distance and a travel time and transmits the information to the movable body control device, and the movable body control device calculates a utilization fee based on the travel distance and travel time for settlement.

Claims 8-14, 24-25, 33-39, 57-63, 73-74, 82-88, 101-102, and 110-116 (called the group B) are so linked that, in the movable body rental system, the movable body transmits the authentication information, the movable body control device transmits the authenticated results according to the authentication information, the movable body controls a lock means according to the authenticated results, detects its position at specified time intervals, and transmits the information showing its position, the movable body control device measures the travel distance and the travel time by using the received information on position, and calculates the utilization fee based on the travel distance and travel time for settlement.

The common matter pertaining to the groups A and B are, in the movable body rental system, to transmit the authentication information from the movable body, transmit the authenticated results according to the authentication information from the movable body control device, control the lock means according to the authenticated results by the movable body, and calculate the utilization fee based on the travel distance and travel time for settlement by the movable body control device.

As the result of investigation, in a car (equivalent to movable body) rental system, it was found that a car rental system, wherein a member code for authentication is transmitted from a car to a command room (equivalent to movable body control device), the command room judges based on the member code on whether the car can be used or not and transmits the judgment to the car, a door is unlocked and an engine start is permitted according to the results, a cumulative travel distance and a travel time are measured by the movable body and, when the car is returned, the utilization fee of a vehicle is calculated based on the travel distance and travel time and the calculated result is transmitted to the command room, and a fee request treatment (equivalent to settlement) such as payment from a bank account is performed in the command room, is described in JP 05-159143 A (OMRON), June 25, 1993 (25.06.93).

Also, the configuration for performing the calculation of fees by an external control device without performing on a movable body side is described in JP 08-101993 A (Daimler Benz Aktiengesellschaft) April 16, 1996 (16.04.96) and JP 61-210497 A (Tateishi Denki K.K.) Sep. 18, 1986 (18.09.86).

As a result, the common matter above is still at a level of a prior art, in the meaning of the second sentence of PCT rule 13.2, the common matter is not special technical matter.

Accordingly, the group A and the group B have such different major parts that the group A acquires the travel distance and the travel time by the movable body and transmits the results to the movable body control device, and the group B acquires the information on position by the movable body and transmits the information to the movable body control device, and measures the travel distance and time by the movable body control device. There is no common matter considered to be a special technical matter pertaining to both thereof in the meaning of the second sentence of PCT rule 13.2 and, therefore, any technical relation including same or corresponding special technical features in the meaning of PCT rule 13 cannot be found between these inventions different from each other.

Form PCT/ISA/210 (extra sheet) (July 1992)

61

| INTERNATIONAL SEARCH REPORT | International application No. |
|---|---|
| | PCT/JP01/06511 |

Continuation of Box No. II of continuation of first sheet (1)

(2) Claims 15-21, 43-49, 64-70, 92-98, and 120-126 (called the group C) are so linked that, in a movable body control system, a movable body measures the position by a position measuring system and transmits the information showing the present position, a movable body control device receives, from the movable body, the information on present position of the movable body and transmits the information showing the present position of the nearby movable body to a portable communication terminal when receiving, from the portable communication terminal of a user, the request for supply of the information on position of a movable body device.

The common matter pertaining to the groups A and B is only the matter of exchanging any data between the movable body and the movable body control device, and the matter is still at a level of a prior art and, therefore, the common matter is not a special technical matter in the meaning of the second sentence of PCT rule 13.2.

Accordingly, the groups A and C have such purposes and major parts different from each other that the group A performs an accounting and a settlement based on the travel distance and time of the movable body and the group C performs the presentation of the information on the nearby movable body requested from the portable communication terminal. There is no common matter considered to be a special technical matter pertaining to both thereof in the meaning of the second sentence of PCT rule 13.2 and, therefore, any technical relation including same or corresponding special technical features in the meaning of PCT rule 13 cannot be found between these inventions different from each other.

(3) Claims 40-42, 89-91, and 117-119 (called the group D) are so linked that a movable body notifies a user of the position thereof when receiving the information on retrieval transmitted from the portable terminal of the user.

The common matter pertaining to the groups A and B above is only such a matter that the movable body performs any treatment and the matter is clearly still at a level of a prior art and, therefore, the common matter is not a special technical matter in the meaning of the second sentence of PCT rule 13.2.

Accordingly, the groups A and D have such purposes and major parts different from each other that the group A performs the accounting and the settlement based on the travel distance and time of the movable body and the group D performs the notification of the position of the movable body to a user who requests the information from a portable communication terminal. There is no common matter considered to be a special technical matter pertaining to both thereof in the meaning of the second sentence of PCT rule 13.2 and, therefore, any technical relation including same or corresponding special technical features in the meaning of PCT rule 13 cannot be found between these inventions different from each other.

As a result, it is clear that Claims 1-126 do not meet the requirements for unity of the inventions, and the number of inventions is four.

Form PCT/ISA/210 (extra sheet) (July 1992)